# EUROPEAN PATENT SPECIFICATION

(11) **EP 3 228 391 B1**
(45) Date of publication and mention of the grant of the patent: **03.03.2021**
(21) Application number: 15865301.4
(22) Date of filing: 03.12.2015
(51) Int. Cl.: B05D 7/24, C09D 5/02, C09D 5/03, C09D 127/12, C09D 127/16, C09D 133/00, C09D 163/00, C09D 167/00

(54) **COATING FILM REPAIR METHOD AND COATED PRODUCT**
BESCHICHTUNGSFILMREPARATURVERFAHREN UND BESCHICHTETES PRODUKT
PROCÉDÉ DE RÉPARATION DE PELLICULE D'ENROBAGE ET PRODUIT ENROBÉ

(30) Priority: 05.12.2014 JP 2014246775
(43) Date of publication of application: 11.10.2017
(73) Proprietor: AGC Inc., Tokyo 100-8405 (JP)
(72) Inventor: SAITO, Shun, Tokyo 100-8405 (JP); AIKAWA, Masataka, Tokyo 100-8405 (JP)
(74) Representative: Müller-Boré & Partner Patentanwälte PartG mbB
(86) International application number: PCT/JP2015/084045
(87) International publication number: WO 2016/088846

(56) References cited:
- JP-A- H0 445 177
- JP-A- H03 281 248
- JP-A- H10 298 486
- JP-A- S58 137 471
- JP-A- 2002 194 297
- JP-A- 2006 212 777
- JP-A- 2006 212 777
- JP-A- 2012 040 503
- US-A- 5 130 365
- US-A1- 2014 034 109
- DATABASE CA [Online] CHEMICAL ABSTRACTS SERVICE, COLUMBUS, OHIO, US; KODAMA, SHUNICHI ET AL: "Coated articles and their repairing process", XP002781042, retrieved from STN Database accession no. 1998:728381 & JP H10 298485 A (ASAHI GLASS CO LTD) 10 November 1998 (1998-11-10)

## Description

The present invention relates to a method for repairing a coating film, and a coated particle having a coating film repaired by a repairing coating material.

In recent years, in coating material industry, a powder coating material is increasingly expected as an environmentally friendly coating material. Particularly, as a powder coating material capable of forming a coating film excellent in the weather resistance, a fluororesin-based powder coating material employing a fluororesin has been developed. As a fluororesin-based powder coating material, for example, a PVDF powder coating material employing polyvinylidene fluoride (hereinafter sometimes referred to as PVDF) as a resin component has been proposed.

Of a coated article having a coating film formed of a PVDF powder coating material, the coating film may be damaged at the time of processing, at the time of transfer, at the time of attachment, etc. When the coating film is damaged, a repair coating film is formed by applying a repairing coating material to a position to be repaired.

As a repairing coating material for a PVDF coating film, the following have been proposed.
(1) A repairing coating material containing a copolymer of vinylidene fluoride and tetrafluoroethylene (Patent Document 1).
(2) A repairing coating material containing a hydroxy group-containing fluorinated polymer, a curing agent and a polymer for improving adhesion (Patent Document 2).

Patent Document 1: JP-A-61-238863
Patent Document 2: JP-A-04-045177

US 5 130 365 A describes a fluororesin based coating composition applicable to plastic surfaces.

In Examples in Patent Document 1, it is disclosed to repair a PVDF coating film comprising only PVDF as the resin component, by a solvent-based repairing coating material containing a copolymer of vinylidene fluoride and tetrafluoroethylene, a titanium oxide pigment in an amount of 12 parts by mass or 3 parts by mass per 100 parts by mass of the copolymer, and an organic solvent.

In Examples of Patent Document 2, it is disclosed to repair a PVDF coating film comprising only PVDF as the resin component, by a solvent-based repairing coating material containing a hydroxy group-containing fluorinated polymer, a polymer for improving adhesion, a curing agent, a titanium oxide pigment in an amount of 50 parts by mass per 100 parts by mass of the hydroxy group-containing fluorinated polymer, and an organic solvent.

However, the repair coating film formed of the solvent-based repairing coating material of the above (1) or (2) is insufficient in the adhesion to the PVDF coating film comprising only PVDF as the resin component, and is likely to be peeled due to expansion and contraction of the coating film by temperature changes with time. Further, light in the low wavelength region in sunlight tends to be absorbed and cracking is likely to occur on the coating film.

Further, the repair coating film formed of the solvent-based repairing coating material of the above (1) or (2) has a low degree of elongation, and if the repair coating film is deformed by pushing or folding e.g. at the time of processing the coated article, cracking is likely to occur on the deformed portion. As a result, moisture and salt content tend to infiltrate from the cracking of the repair coating film, reach the substrate through the scar in the PVDF coating film and tend to cause corrosion of the substrate. Further, if the repair coating film is deformed by pushing or folding, the deformed portion tends to be whitened.

The object of the present invention is to provide a method for repairing a PVDF coating film by a repairing coating material, by which a coated article having high adhesion between the PVDF coating film and the repair coating film and favorable processability of the repair coating film can be obtained, and a coated article having a PVDF coating film repaired by the repairing coating material.

The present invention has the following constructions [1] to [13].
[1] A method for repairing a coating film, which comprises applying a second coating material to a position to be repaired of a first coating film formed by applying a first coating material to the surface of a substrate, to form a second coating film thereby to repair the first coating film,
   wherein the first coating material is a powder coating material containing a polyvinylidene fluoride homopolymer or copolymer (hereinafter sometimes referred to as PVDF (A)) and a resin (B) other than PVDF (A),
   wherein the second coating material is a coating material containing a fluororesin (L) and a titanium oxide pigment (M), and
   wherein the content of the titanium oxide pigment (M) is from 15 to 190 parts by mass per 100 parts by mass of the fluororesin (L).
[2] The method for repairing a coating film according to the above [1], wherein the resin (B) is at least one member selected from the group consisting of an acrylic resin, a polyester resin and an epoxy resin.
[3] The method for repairing a coating film according to the above [1] or [2], wherein the fluororesin (L) is at least one member selected from the group consisting of a vinylidene fluoride polymer, a hydroxy group-containing fluorinated polymer and a carboxy group-containing fluorinated polymer.
[4] The method for repairing a coating film according to any one of the above [1] to [3], wherein the second coating material is an aqueous coating material or a solvent-based coating material.
[5] A coated article, which comprises a substrate, a first coating film formed by applying a first coating material to the surface of the substrate, and a second coating film formed by applying a second coating material to a position to be repaired of the first coating film,
   wherein the first coating material is a powder coating material containing PVDF (A) and a resin (B) other than PVDF (A),
   wherein the second coating material is a coating material containing a fluororesin (L) and a titanium oxide pigment (M), and
   wherein the content of the titanium oxide pigment (M) is from 15 to 190 parts by mass per 100 parts by mass of the fluororesin (L).
[6] The coated article according to the above [5], wherein the resin (B) is at least one member selected from the group consisting of an acrylic resin, a polyester resin and an epoxy resin.
[7] The coated article according to the above [5] or [6], wherein the fluororesin (L) is at least one member selected from the group consisting of a vinylidene fluoride polymer, a hydroxy group-containing fluorinated polymer and a carboxy group-containing fluorinated polymer.
[8] The coated article according to any one of the above [5] to [7], wherein the second coating material is an aqueous coating material or a solvent-based coating material.
[9] The coated article according to any one of the above [5] to [8] or the method for repairing a coating film according to any one of the above [1] to [4], wherein PVDF (A) has a melting point of from 152 to 160°C, a number average molecular weight of from 50,000 to 400,000, and a mass average molecular weight of from 100,000 to 500,000,
   wherein the number average molecular weight and the mass average molecular weight are values as calculated as polystyrene measured by a gel permeation chromatography (GPC) method.
[10] The coated article according to any one of the above [5] to [9] or the method for repairing a coating film according to any one of the above [1] to [4] and [9], wherein the content of PVDF (A) is from 30 to 90 parts by mass per 100 parts by mass of the total amount of PVDF (A) and the resin (B).
[11] The coated article according to any one of the above [5] to [10] or the method for repairing a coating film according to any one of the above [1] to [4], [9], and [10], wherein the fluororesin (L) has a glass transition temperature of at most 300°C,
   wherein the glass transition temperature is a midpoint glass transition temperature measured by a differential scanning calorimetry (DSC) method.
[12] The coated article according to any one of the above [5] to [11] or the method for repairing a coating film according to any one of the above [1] to [4] and [9] to [11], wherein the titanium oxide pigment (M) is surface-treated and has a titanium oxide content of from 80 to 95 wt%.
[13] The coated article according to any one of the above [5] to [12] or the method for repairing a coating film according to any one of the above [1] to [4] and [9] to [12], wherein the thickness of the first coating film is from 20 to 1,000 µm, and the thickness of the second coating film is from 10 to 200 µm.

According to the repairing coating material and the method for repairing a coating film of the present invention, it is possible to obtain a coated article having high adhesion between the PVDF coating film and the repair coating film and having favorable processability of the repair coating film.

The following definition of terms apply throughout the present specification including Claims.

A "fluororesin" means a resin having fluorine atoms in the molecule.

A "melting point" means a temperature at the melting peak measured by a differential scanning calorimetry (DSC) method.

A "glass transition temperature" means a midpoint glass transition temperature measured by a differential scanning calorimetry (DSC) method.

A "number average molecular weight" and a "mass average molecular weight" are values as calculated as polystyrene measured by a gel permeation chromatography (GPC) method.

"Dry blending" means to mix two or more powders without melting the powders or without adding a solvent.

A "molten film" means a film formed of a melt of a powder coating material, formed by applying the powder coating material.

A "wet film" means a film containing a medium (either one or both of water and an organic solvent) formed by applying an aqueous coating material or a solvent-based coating material.

A "coating film" means a film formed by cooling and, as the case requires, curing the molten film, or a film formed by drying and, as the case requires, curing the wet film.

A "(meth)acrylate" is a general term for an acrylate and a methacrylate.

A "unit" is present in a polymer to constitute the polymer, and it means a moiety derived from a monomer. A unit to be formed by addition polymerization of a monomer having a carbon-carbon unsaturated double bond, as derived from the monomer, is a bivalent unit formed by cleavage of the unsaturated double bond. A unit constituting a polyester resin, as derived from a polyvalent carboxylic acid compound, is a monovalent or higher valent unit having a hydroxy group removed from at least one carboxy group of the polyvalent carboxylic acid compound, and a unit as derived from a polyhydric alcohol compound is a monovalent or higher valent unit having a hydrogen atom removed from at least one hydroxy group of the polyhydric alcohol compound. Further, one having a structure of a certain unit chemically changed after forming a polymer, is also referred to as a unit.

Optionally, a unit derived from each monomer may be referred to by a name having "unit" attached to the monomer name.

A property such that even if a coating film is deformed by pushing or folding, the deformed part is less likely to have cracking or discoloration, will be referred to as processability of the coating film.

### [Method for repairing coating film]

The method for repairing a coating film of the present invention is a method, which comprises applying a specific second coating material (repairing coating material) to a position to be repaired of a first coating film (PVDF coating film) formed by applying a specific first coating material to the surface of a substrate, to form a second coating film (repair coating film) thereby to repair the first coating film.

### (Substrate)

As the material of the substrate, a metal such as aluminum, iron, magnesium or an alloy thereof is preferred, and aluminum or its alloy is particularly preferred in that it is excellent in the corrosion resistance, it is light in weight, and it has performance excellent for the application as a building material.

The aluminum alloy may be an alloy of aluminum and at least one member selected from the group consisting of copper, manganese, silicon, magnesium, zinc and nickel.

The shape and the size of the substrate are not particularly limited.

Aluminum or the aluminum alloy may have an oxide coating film on its surfaces, or may be surface-treated with a chemical conversion treatment agent. It is particularly preferably surface-treated with a chemical conversion treatment agent, whereby the adhesion between the substrate and the coating film formed of the first coating material will be excellent.

The chemical conversion treatment agent may, for example, be a hexavalent chromium-based chemical conversion treatment agent, a trivalent chromium-based chemical conversion treatment agent, a zirconium-based chemical conversion treatment agent or a titanium-based chemical conversion treatment agent. In view of environment-friendliness, a zirconium-based chemical conversion treatment agent or a titanium-based chemical conversion treatment agent is preferred.

Specifically, the zirconium-based chemical conversion treatment agent may, for example, be "Chemibonder (tradename) 5507, 5703, 5705, 5706" manufactured by The Japan Cee-Bee Chemical Co., Ltd., "Palcoat 3762, 3796, 20X" manufactured by Nihon Parkerizing Co., Ltd., "Alodine (tradename) 5200, 4707" manufactured by Henkel Japan Ltd., "ALSURF (tradename) 320, 375" manufactured by NIPPON PAINT SURF CHEMICALS CO., LTD., "E-CLPS (tradename) 1700, 1900" manufactured by Bulk Chemicals Japan, Inc., or "INTERLOX (tradename) 5705, 5707"manufactured by Atotech Deutshland GmbH, and the titanium-based chemical conversion treatment agent may, for example, be "ALSURF (tradename) CX4707" manufactured by NIPPON PAINT SURF CHEMICALS CO., LTD. or "E-CLPS (tradename) 2100, 2900" manufactured by Bulk Chemicals Japan, Inc.

### (First coating material)

The first coating material is a powder coating material containing PVDF (A) and a resin (B) other than PVDF (A) (hereinafter sometimes referred to simply as a resin (B)).

As specific examples of the first coating material, the following powder coating material (I) and powder coating material (II) may be mentioned.

Powder coating material (I): containing a powder (X) composed of a composition for a powder coating material containing PVDF (A) and the resin (B) (hereinafter sometimes referred to as composition (α)).

Powder coating material (II): containing a powder (X) composed of the composition (α) and a powder (Y) composed of a composition for a powder coating material containing a resin (C) other than a fluororesin and containing no fluororesin (hereinafter sometimes referred to as a composition (β)).

Now, the powder coating material (I) and the powder coating material (II) will be described.

### (Powder coating material (I))

The powder coating material (I) contains at least one powder (X) mentioned below.

Powder (X): A powder composed of a composition (α) containing PVDF (A) and the resin (B).

The composition (α) may contain, as the case requires, a pigment (D), a curing agent (E), a curing catalyst (F), and other component (G).

The powder (X) can be produced by using the composition (α). The powder (X) may be used as the powder coating material (I) as it is, or the powder (X) may be mixed with the after-mentioned powder (Y) and used as a powder coating material (II).

The content of the powder (X) in the powder coating material (I) is preferably from 50 to 100 mass%, more preferably from 70 to 100 mass%, further preferably from 80 to 100 mass%, particularly preferably from 90 to 100 mass%. The powder coating material (I) may be a coating material composed solely of the powder (X).

### <PVDF (A)>

PVDF (A) is a homopolymer of vinylidene fluoride (hereinafter sometimes referred to as VDF) or a copolymer comprising at least 80 mol% and less than 100 mol%, preferably from 83 to 9 mol% of VDF units and more than 0 mol% and at most 20 mol%, preferably from 85 to 95 mol% of monomer units other than VDF units. If the proportion of other monomer units is higher than 20 mol%, the first coating film will be inferior in the weather resistance. In a case where the powder (X) is used as a thermosetting powder coating material, PVDF (A) may have a reactive group reactive with the curing agent (E), such as a carboxy group, hydroxy group or a sulfo group.

Other monomer may, for example, be tetrafluoroethylene (hereinafter sometimes referred to as TFE), trifluoroethylene, chlorotrifluoroethylene (hereinafter sometimes referred to as CTFE), hexafluoropropylene, perfluorobutenoic acid, maleic acid or vinyl acetate, and is preferably TFE, CTFE or hexafluoropropylene.

The melting point of PVDF (A) is preferably from 151 to 170°C, particularly preferably from 152 to 160°C. The number average molecular weight (Mn) of PVDF (A) is preferably from 50,000 to 400,000, particularly preferably from 100,000 to 300,000. The mass average molecular weight (Mw) of PVDF (A) is preferably from 100,000 to 500,000, particularly preferably from 150,000 to 400,000.

When the melting point, the number average molecular weight (Mn) and the mass average molecular weight (Mw) of PVDF (A) are within such ranges, the composition (α) is easily pulverized to form a powder (X). Further, the obtainable first coating film will be excellent in the processability and will be excellent in the adhesion to the substrate. Further, dispersibility of the pigment (D) in the composition (α) will be excellent. As a result, the obtainable first coating film will have more excellent weather resistance. Further, the composition (α) will be melt-kneaded at low temperature, and deterioration of the resin (B) can be suppressed. As a result, yellowing of the obtainable first coating film will be suppressed, and the first coating film will be excellent in the appearance.

The molecular weight distribution (Mw/Mn) of PVDF (A) is preferably from 1 to 3, particularly preferably from 1.2 to 2.5. When the molecular weight distribution of PVDF (A) is within the above range, the melt viscosity of PVDF (A) can be kept low, whereby excellent pigment dispersibility will be achieved at the time of melt kneading. Further, when the number average molecular weight, the mass average molecular weight and the molecular weight distribution of PVDF (A) are within the above range, the melting point of PVDF (A) is readily kept within the above range.

PVDF (A) may be produced by polymerizing VDF and as the case requires, another monomer by a known polymerization method. The polymerization method may, for example, be emulsion polymerization or suspension polymerization, and is preferably emulsion polymerization.

### <Resin (B)>

The resin (B) is any resin other than PVDF (A).

The resin (B) may be a fluororesin other than PVDF, such as the after-described fluororesin (L), or may be a resin containing no fluorine atom, such as an acrylic resin or a polyester resin. It is preferably at least one member selected from the group consisting of an acrylic resin, a polyester resin and an epoxy resin, whereby the adhesion between the first coating film and the second coating film will be high, and the second coating film will have favorable processability. The acrylic resin and the polyester resin may be thermoplastic or may be thermosetting.

### Acrylic resin:

The acrylic resin is a polymer having (meth)acrylate units. In a case where the powder (X) is used as a thermosetting powder coating material, it may have a reactive group reactive with the curing agent (E), such as a carboxy group, a hydroxy group or a sulfo group.

The acrylic resin is preferably a methyl methacrylate (hereinafter sometimes referred to as MMA) copolymer comprising MMA units and monomer units other than MMA units, in view of adjustability of the glass transition temperature.

Other monomer may, for example, be an alkyl (meth)acrylate (excluding MMA), a hydroxyalkyl (meth)acrylate, acrylic acid, methacrylic acid, acrylamide, methacrylamide, glycidyl methacrylate, glycidyl acrylate or γ-trimethoxysilane methacrylate. In view of dispersibility of the pigment (D), adhesion to the substrate, and easiness of pulverization of pellets at the time of producing the powder coating material, preferred is ethyl methacrylate (hereinafter sometimes referred to as EMA).

The proportion of the MMA units is preferably from 50 to 90 mol%, particularly preferably from 55 to 85 mol% based on 100 mol% of all the monomer units. The number average molecular weight (Mn) of the acrylic resin is preferably from 20,000 to 100,000, particularly preferably from 30,000 to 90,000. The mass average molecular weight (Mw) of the acrylic resin is preferably from 30,000 to 200,000, particularly preferably from 40,000 to 150,000.

When the proportion of the MMA units, the number average molecular weight (Mn) of the acrylic resin and the mass average molecular weight (Mw) of the acrylic resin are within such ranges, the composition is easily pulverized to form a powder. Further, the composition will be less sticky at the time of melt-kneading, and blocking of the powder can be suppressed. Further, the molten film will be excellent in wettability to the substrate and as a result, the first coating film will be excellent in the adhesion to the substrate. Further, the melt viscosity of the composition at the time of melt kneading will be lowered, whereby dispersibility of the pigment (D) in the composition will be excellent, and as a result, the weather resistance of the first coating film will be more excellent. Further, the melt viscosity of the molten film at the time of application will be lowered and as a result, bubbles will readily be removed, and the adhesion of the first coating film to the substrate will be excellent.

The molecular weight distribution (Mw/Mn) of the acrylic resin is preferably from 1 to 4, particularly preferably from 1.2 to 3. When the molecular weight distribution of the acrylic resin is within the above range, the melt viscosity at a temperature (usually from 110 to 220°C) in a step (a) of melt-kneading the respective components to obtain a kneaded product composed of the composition (α) described hereinafter tends to be low, and excellent pigment dispersibility, adhesion to the substrate and smoothness of the first coating film will be achieved. Further, when the number average molecular weight, the mass average molecular weight and the molecular weight distribution of the acrylic resin are within the above ranges, the glass transition temperature of the acrylic resin will easily be adjusted.

### Polyester resin:

The polyester resin may be one having units derived from a polyvalent carboxylic acid compound and units derived from a polyhydric alcohol compound and as the case requires, units other than these two types of units (for example, units derived from a hydroxycarboxylic acid compound).

Hereinafter, units derived from a polyvalent carboxylic acid compound will sometimes be referred to as "polyvalent carboxylic acid units", and units derived from a polyhydric alcohol compound will sometimes be referred to as "polyhydric alcohol units".

The polyester resin is preferably a linear polymer or a branched polymer having a small number of branches, particularly preferably a linear polymer. A branched polymer having a large number of branches is likely to have a high softening point and a high melting temperature, and even in a case where the polyester resin is a branched polymer, the softening point is preferably at most 200°C. The polyester resin is more preferably one which is solid at room temperature and which has a softening point of from 100 to 150°C.

The number average molecular weight of the polyester resin is preferably at most 5,000, whereby the melt viscosity of the molten film will be moderately low. The mass average molecular weight of the polyester resin is preferably from 2,000 to 20,000, more preferably from 2,000 to 10,000, whereby the melt viscosity of the molten film will be moderately low. The polyester resin is more preferably one having a number average molecular weight of at most 5,000 and a mass average molecular weight of from 2,000 to 20,000, particularly preferably one having a number average molecular weight of at most 5,000 and a mass average molecular weight of from 2,000 to 10,000.

In a case where the powder (X) is used as a thermosetting powder coating material, the polyester resin may have a reactive group reactive with the curing agent (E). In a case where it has a reactive group, at least part of terminal units of a polymer chain of the polyester resin are preferably monovalent polyvalent carboxylic acid units or monohydric polyhydric alcohol units, and a free carboxy group of the units in the former case or a free hydroxy group of the units in the latter case functions as the reactive group. The units having the reactive group may be units other than the terminal units. For example, dihydric alcohol units derived from a polyhydric alcohol compound having three or more hydroxy groups, are units having a free hydroxy group, and the polyester resin may have dihydric or higher units having such a reactive group.

The reactive group in the polyester resin is preferably a hydroxy group in view of excellent water resistance, alkali resistance and acid resistance of the first coating film. The polyester resin usually has hydroxy groups and carboxy groups, and the polyester resin is preferably one mainly having hydroxy groups.

The hydroxy value of the polyester resin is preferably from 20 to 100 mgKOH/g, particularly preferably from 20 to 80 mgKOH/g. The acid value is preferably from 1 to 80 mgKOH/g, particularly preferably from 3 to 50 mgKOH/g.

The hydroxy value and the acid value are measured in accordance with JIS K1557-1: 2007 (ISO 14900: 2001).

The polyester resin is preferably a polyester resin having C₈₋₁₅ aromatic polyvalent carboxylic acid compound units and C₂₋₁₀ polyhydric alcohol compound units, in view of excellent impact resistance of the obtainable first coating film and excellent dispersibility of the pigment (D).

The polyvalent carboxylic acid units are preferably units of a C₈₋₁₅ aromatic polyvalent carboxylic acid compound. The C₈₋₁₅ aromatic polyvalent carboxylic acid compound is a compound having an aromatic ring and at least 2 carboxy groups, and the carboxy groups are bonded to the carbon atoms of the aromatic ring. Further, the compound may be an anhydride having two carboxy groups dehydrated.

The aromatic ring is preferably a benzene ring or naphthalene ring, particularly preferably a benzene ring. Two benzene rings may be present in one molecule.

The number of carboxy groups in the aromatic polyvalent carboxylic acid compound is preferably from 2 to 4, particularly preferably 2.

The C₈₋₁₅ aromatic polyvalent carboxylic acid compound may, for example, be phthalic acid, isophthalic acid, terephthalic acid, naphthalene dicarboxylic acid, trimellitic acid, pyromellitic acid or phthalic anhydride.

The polyvalent carboxylic acid units are preferably isophthalic acid units, whereby the first coating film will be excellent in the weather resistance.

The polyhydric alcohol units are preferably units of a C₂₋₁₀ polyhydric alcohol compound. The C₂₋₁₀ polyhydric alcohol compound is a compound having at least 2 hydroxy groups. The polyhydric alcohol compound is preferably an aliphatic polyhydric alcohol or an alicyclic polyhydric alcohol, particularly preferably an aliphatic polyhydric alcohol. The number of hydroxy groups in the polyhydric alcohol compound is preferably from 2 to 4, particularly preferably 2.

The C₂₋₁₀ polyhydric alcohol compound may, for example, be ethylene glycol, diethylene glycol, triethylene glycol, 1,2-propanediol, 1,3-propanediol, 1,3-butanediol, 1,4-butanediol, 1,5-pentanediol, neopentyl glycol, spiroglycol, 1,10-decanediol, 1,4-cyclohexane dimethanol, trimethylolethane, trimethylolpropane, glycerin or pentaerythritol.

The polyhydric alcohol units are preferably C₃₋₈ polyhydric alcohol units, particularly preferably C₄₋₆ polyhydric alcohol units, whereby the first coating film will be excellent in the adhesion to the substrate.

The polyhydric alcohol is preferably neopentyl glycol, 1,2-pentanediol, 1,5-pentanediol or trimethylolpropane, and in view of availability, more preferably neopentyl glycol or trimethylolpropane.

### Epoxy resin:

The epoxy resin may, for example, be a bisphenol A type epoxy resin, bisphenol F type epoxy resin, or 1,2-epoxy-4-(2-oxiranyl)cyclohexane adduct of 2,2-bis(hydroxymethyl)-1-butanol.

### <Pigment (D)>

The pigment (D) is preferably at least one member selected from the group consisting of luster pigment, rust-preventive pigment, coloring pigment and extender pigment.

The luster pigment is a pigment to let the first coating film shine. The luster pigment may, for example, be aluminum powder, nickel powder, stainless steel powder, copper powder, bronze powder, gold powder, silver powder, mica powder, graphite powder, glass flakes, and flake-like iron oxide powder.

The rust-preventive pigment is a pigment to prevent corrosion or modification of a substrate, for the substrate which is required to have rust resistance. As the rust-preventive pigment, preferred is a lead-free anticorrosive pigment presenting less impact on the environment. The lead-free anticorrosive pigment may, for example, be zinc cyanamide, zinc oxide, zinc phosphate, calcium magnesium phosphate, zinc molybdate, barium borate, and zinc calcium cyanamide.

The coloring pigment is a pigment for coloring the first coating film. The coloring pigment may, for example, be titanium oxide, carbon black, iron oxide, phthalocyanine blue, phthalocyanine green, quinacridone, isoindolinone, benzimidazolone, and dioxazine.

The extender pigment is a pigment to improve the hardness of the first coating film and to increase the thickness of the first coating film. Further, it is preferably incorporated from such a viewpoint that when the substrate is cut, the cut surface of the first coating film can thereby be made clean. The extender pigment may, for example, be talc, barium sulfate, mica, and calcium carbonate.

### <Curing agent (E)>

In a case where the powder (X) is used as a thermosetting powder coating material, the composition (α) may contain a curing agent (E).

The curing agent (E) is a compound which reacts with reactive groups of the resin (PVDF (A) and the resin (B)) to crosslink the resin or to increase the molecular weight of the resin thereby to cure the resin. The curing agent (E) has at least 2 reactive groups capable of reacting with reactive groups (hydroxy groups and carboxy groups) which the resin has. The reactive groups of the curing agent (E) are preferably reactive groups capable of reacting when the powder coating material is heated and melted, and preferably, for example, blocked isocyanate groups. When the powder coating material is heated and melted, blocked isocyanate groups will become isocyanate groups, as the blocking agent is removed, and the isocyanate groups will act as the reactive groups.

As the curing agent (E), it is possible to use a known compound. For example, a blocked isocyanate-type curing agent, an amine-type curing agent (a melamine resin, a guanamine resin, a sulfoamide resin, a urea resin, and an aniline resin), a β-hydroxyalkylamide-type curing agent or a triglycidyl isocyanurate-type curing agent may be mentioned. Particularly preferred is a blocked isocyanate-type curing agent, in that the obtainable first coating film will be excellent in the adhesion to the substrate, the processability and the water resistance.

As the curing agent (E), one type may be used alone, or two or more types may be used in combination.

The softening temperature of the curing agent (E) is preferably from 10 to 120°C, particularly preferably from 40 to 100°C. When the softening temperature is at least the above lower limit value, the powder coating material is hardly cured at room temperature, and granulated agglomerates are hardly form. When the softening temperature is at most the above upper limit value, when the composition is melt-kneaded to produce a powder, the curing agent (E) will be homogeneously dispersed in the powder, and the obtainable first coating film will be excellent in the surface smoothness, the strength, and the moisture resistance.

The blocked isocyanate-type curing agent (E1) is preferably one which is solid at room temperature.

The blocked isocyanate-type curing agent (E1) is preferably one produced by reacting an aliphatic, aromatic or araliphatic diisocyanate with a low molecular weight compound having active hydrogen, to obtain a polyisocyanate, which is then reacted with a blocking agent, for masking.

### <Curing catalyst (F)>

In a case where the powder (X) is used as a thermosetting powder coating material, the composition (α) may contain a curing catalyst (F).

The curing catalyst (F) is one to promote a curing reaction and to impart good chemical properties and physical properties to the first coating film.

In a case where the blocked isocyanate-type curing agent (E1) is used, the curing catalyst (F) is preferably a tin catalyst (tin octylate, tributyltin laurate, and dibutyltin dilaurate).

As the curing catalyst (F), one type may be used alone, or two or more types may be used in combination.

### <Other component (G)>

The composition (α) may contain, as the case requires, other component (G).

Other component (G) may, for example, be an ultraviolet absorber, a light stabilizer, a matting agent (ultrafine synthetic silica), a surfactant (a nonionic surfactant, a cationic surfactant or an anionic surfactant), a leveling agent, a surface modifier (to improve the surface smoothness of the first coating film), a degassing agent (having an effect to discharge out of the molten film air included in the powder, the blocking agent, and moisture from the curing agent (E), so that they will not remain inside the first coating film, and it is usually solid, but when melted, becomes to have a very low viscosity), a filler, a heat stabilizer, a thickener, a dispersing agent, an antistatic agent, a lust inhibiter, a silane coupling agent, an antifouling agent, and a low-pollution treatment agent.

### <Content of each component of composition (α)>

The content of PVDF (A) in the composition (α) is preferably from 30 to 90 parts by mass, more preferably from 35 to 90 parts by mass, particularly preferably from 40 to 85 parts by mass, per 100 parts by mass of the total amount of PVDF (A) and the resin (B). When the content of PVDF (A) is at least the above lower limit value, the obtainable first coating film will be more excellent in the weather resistance. When the content of PVDF (A) is at most the above upper limit, the first coating film will be more excellent in the processability.

It is preferred that the composition (α) contains as the resin component only PVDF (A) and the resin (B), that is, it contains no resin other than PVDF (A) and the resin (B). When the composition (α) contains no other resin, the obtainable first coating film will be more excellent in the weather resistance and the processability.

In a case where the composition (α) contains the pigment (D), the content of the pigment (D) in the composition (α) is preferably from 20 to 200 parts by mass, particularly preferably from 50 to 150 parts by mass per 100 parts by mass of the resin components contained in the composition (α).

In a case where the composition (α) contains the curing agent (E), the content of the curing agent (E) in the composition (α) is preferably from 1 to 50 parts by mass, particularly preferably from 3 to 30 parts by mass per 100 parts by mass of the resin components contained in the composition (α).

In a case where the curing agent (E) is the blocked isocyanate-type curing agent (E1), the content of the blocked isocyanate-type curing agent (E1) in the composition (α) is preferably such an amount that the molar ratio of isocyanate groups to hydroxy groups in the composition (α) will be from 0.05 to 1.5, particularly preferably such an amount that the molar ratio will be from 0.8 to 1.2. When the molar ratio is at least the lower limit value in the above range, the degree of curing of the powder coating material will be high, and the obtainable first coating film will be excellent in the adhesion to the substrate, the hardness, and the chemical resistance. When the molar ratio is at most the upper limit value in the above range, the first coating film will be less likely to become brittle, and moreover, the first coating film will be excellent in the heat resistance, chemical resistance, and moisture resistance.

In a case where the composition (α) contains the curing catalyst (F), the content of the curing catalyst (F) in the composition (α) is preferably from 0.0001 to 10 parts by mass per 100 parts by mass in total of the solid content in the composition (α) other than the pigment (D). When the content of the curing catalyst (F) is at least the above lower limit value, the catalytic effect tends to be sufficiently obtainable. When the content of the curing catalyst (F) is at most the above upper limit value, a gas such as air included in the powder coating material at the time of application of the powder coating material tends to be easily discharged, whereby deterioration in the heat resistance, weather resistance and water resistance of the first coating film caused by remaining gas, tends to be less likely.

In a case where the composition (α) contains other component (G), the total content of other component (G) in the composition (α) is preferably at most 45 mass%, particularly preferably at most 30 mass% in the composition (α) (100 mass%).

### <Process for producing powder coating material (I)>

The powder coating material (I) may be produced by a known production process, for example, by a production process comprising the following steps (a), (b) and (c).
(a) A step of melt-kneading a mixture which contains PVDF (A) and the resin (B) and as the case requires, may contain the pigment (D), the curing agent (E), the curing catalyst (F), and other component (G) to obtain a kneaded product composed of the composition (α).
(b) A step of pulverizing the kneaded product composed of the composition (α) to obtain the powder (X).
(c) A step of classifying the powder (X) as the case requires.

### (Powder coating material (II))

The powder coating material (II) contains at least one powder (X) and at least one powder (Y) described hereinafter.

Powder (Y): A powder composed of a composition (β) containing a resin (C) other than a fluororesin and containing no fluororesin.

The composition (β) may contain, as the case requires, the pigment (D), the curing agent (E), the curing catalyst (F), and other component (G).

The total content of the powder (X) and the powder (Y) in the powder coating material (II) is preferably from 50 to 100 mass%, more preferably from 70 to 100 mass%, further preferably from 80 to 100 mass%, particularly preferably from 90 to 100 mass%. The powder coating material (II) may be a coating material composed solely of the powder (X) and the powder (Y).

The mixture ratio (powder (X)/powder (Y) (mass ratio)) of the powder (X) to the powder (Y) in the powder coating material (II) is preferably from 10/90 to 90/10, more preferably from 20/80 to 80/20, particularly preferably from 25/75 to 75/25. When the proportion of the powder (X) is at least the above lower limit value, the first coating film will be more excellent in the weather resistance. When the proportion of the powder (Y) is at least the above lower limit value, the cost of the first coating film can be suppressed.

### <Resin (C)>

The resin (C) is any resin other than a fluororesin.

The resin (C) is at least one member selected from the group consisting of an acrylic resin, a polyester resin, a urethane resin, an epoxy resin and a silicone resin, whereby the adhesion between the first coating film and the second coating film is high, and processability of the second coating film will be excellent.

### Acrylic resin, polyester resin and epoxy resin:

As the acrylic resin, the polyester resin and the epoxy resin, the same resins as exemplified for the composition (α) may be mentioned, and the preferred embodiments are also the same.

### Urethane resin:

The urethane resin may be a mixture obtained by mixing a polyol (such as acrylic polyol, polyester polyol, polyether polyol, propylene glycol or propylene oxide) and an isocyanate compound, or a resin obtained by reacting them. It is preferred to use a mixture of a powdery polyol (such as acrylic polyol, polyester polyol or polyether polyol) and a powdery isocyanate compound.

### Silicone resin:

The silicone resin may be one which has a branched structure, which has a silanol group (Si-OH) as a reactive group, which may be cured by dehydration condensation with one another, and which is capable of forming a first coating film of a three-dimensional crosslinked structure after curing. Further, a relatively low molecular weight silicone resin (modified silicone resin intermediate) may be used in combination with another thermosetting resin (alkyd resin, polyester resin, epoxy resin, and acrylic resin).

### <Pigment (D), curing agent (E), curing catalyst (F) and other component (G)>

As the pigment (D), the curing agent (E), the curing catalyst (F) and other component (G), the same components as exemplified for the composition (α) may be mentioned, and the preferred embodiments are also the same.

### <Content of each component in composition (β)>

The content of the resin (C) in the composition (β) is preferably from 20 to 85 mass%, more preferably from 30 to 80 mass%, particularly preferably from 40 to 75 mass% in the composition (β) (100 mass%).

In a case where the composition (β) contains the curing agent (E), the content of the curing agent (E) in the composition (β) is preferably from 1 to 50 parts by mass, particularly preferably from 3 to 30 parts by mass per 100 parts by mass of the resin components contained in the composition (β).

In a case where the curing agent (E) is the blocked isocyanate-type curing agent (E1), the content of the blocked isocyanate-type curing agent (E1) in the composition (β) is preferably such an amount that the molar ratio of isocyanate groups to hydroxy groups in the composition (β) will be preferably from 0.05 to 1.5, particularly preferably such an amount that the molar ratio will be from 0.8 to 1.2. When the molar ratio is at least the lower limit value in the above range, the degree of curing of the powder coating material will be high, and the obtainable first coating film will be excellent in the adhesion to the substrate, the harness, and the chemical resistance. When the molar ratio is at most the above upper limit value in the above range, the first coating film will be less likely to become brittle, and moreover, the first coating film will be excellent in the heat resistance, chemical resistance, and moisture resistance.

In a case where the composition (β) contains the curing catalyst (F), the content of the curing catalyst (F) in the composition (β) is preferably from 0.0001 to 10 parts by mass per 100 parts by mass in total of the solid content in the composition (β) other than the pigment (D). When the content of the curing catalyst (F) is at least the above lower limit value, the catalytic effect tends to be sufficiently obtainable. When the content of the curing catalyst (F) is at most the above upper limit value, a gas such as air included in the powder coating material at the time of application of the powder coating material tends to be easily discharged, whereby deterioration in the heat resistance, weather resistance and water resistance of the first coating film caused by remaining gas, tends to be less likely.

In a case where the composition (β) contains other component (G), the total content of other component (G) in the composition (β) is preferably at most 45 mass%, particularly preferably at most 30 mass% in the composition (β) (100 mass%).

### <Content of each component in the entire powder coating material (II)>

The total content of the resin (B) in the composition (α) and the resin (C) in the composition (β) is preferably from 10 to 90 parts by mass, more preferably from 20 to 80 parts by mass, particularly preferably from 25 to 75 parts by mass per 100 parts by mass of the total amount of PVDF (A) and the resin (B) in the composition (α) and the resin (C) in the composition (β). When the total content of the resin (B) and the resin (C) is at least the above lower limit value, the cost of the first coating film can be suppressed. When the total content of the resin (B) and the resin (C) is at most the above upper limit value, the obtainable first coating film will be more excellent in the weather resistance.

The total content of the pigment (D) in the composition (α) and the pigment (D) in the composition (β) is preferably from 20 to 200 parts by mass, particularly preferably from 50 to 150 parts by mass per 100 parts by mass of the resin components contained in the composition (α) and the composition (β).

### <Process for producing powder coating material (II)>

The powder coating material (II) may be produced by a known production process, for example, a production process comprising the following steps (a) to (g).
(a) A step of melt-kneading a mixture which contains PVDF (A) and the resin (B) and as the case requires, may contain the pigment (D), the curing agent (E), the curing catalyst (F), and other component (G) to obtain a kneaded product composed of the composition (α).
(b) A step of pulverizing the kneaded product composed of the composition (α) to obtain the powder (X).
(c) A step of classifying the powder (X) as the case requires.
(d) A step of melt-kneading a mixture which contains the resin (C), contains no fluororesin and as the case requires, may contain the pigment (D), the curing agent (E), the curing catalyst (F), and other component (G) to obtain a kneaded product composed of the composition (β).
(e) A step of pulverizing the kneaded product composed of the composition (β) to obtain the powder (Y).
(f) A step of classifying the powder (Y) as the case requires.
(g) A step of dry-blending the powder (X) and the powder (Y).

The mixture ratio (powder (X)/powder (Y) (mass ratio)) of the powder (X) to the powder (Y) is preferably from 10/90 to 90/10, more preferably from 20/80 to 80/20, particularly preferably from 25/75 to 75/25. When the proportion of the powder (X) is at least the above lower limit value, the obtainable first coating film will be more excellent in the weather resistance. When the proportion of the powder (Y) is at least the above lower limit value, the cost of the first coating film can be suppressed.

### (First coating film)

The first coating film is a coating film formed by applying the first coating material (for example, the powder coating material (I) or the powder coating material (II)) to the surface of a substrate.

The first coating film can be formed, for example, by the following steps (h) and (i).
(h) A step of applying the first coating film to the surface of a substrate to form a molten film composed of a melt of the powder coating material.
(i) A step of cooling the molten film to form the first coating film.

### Step (h):

The first coating material is applied to the surface of a substrate to form a molten film composed of a melt of the powder coating material on the surfaces of a substrate.

The molten film composed of a melt of the powder coating material may be formed simultaneously with application of the first coating material to the substrate, or may be formed by depositing the powder of the first coating material on a substrate and heating and melting the powder on the substrate. In a case where the first coating material is a thermosetting coating material, since the curing reaction of the reactive components in the composition starts substantially at the same time as heating and melting of the first coating material, it is necessary that the heating and melting of the first coating material are conducted substantially at the same time as deposition on the substrate, or the heating and melting of the first coating material are conducted after deposition of the first coating material on the substrate.

The heating temperature (hereinafter sometimes referred to as "baking temperature") and the heating holding time (hereinafter sometimes referred to as "baking time") to heat and melt the first coating material, and to maintain the molten state for a predetermined time, are suitably set depending upon the type and composition of raw material components of the first coating material and the desired thickness of the coating film. In a case where the first coating material is a thermoplastic coating material, the baking temperature is preferably from 200 to 300°C, and the baking time is preferably from 5 to 180 minutes. In a case where the first coating material is a thermosetting coating material, the baking temperature is preferably set depending on the reaction temperature of the curing agent (E). For example, the baking temperature in the case of using a blocked polyisocyanate-type curing agent (E1) as the curing agent (E), is preferably from 170 to 210°C. The baking time is preferably from 5 to 120 minutes, particularly preferably from 10 to 60minutes.

As the coating method, an electrostatic coating method, an electrostatic spraying method, an electrostatic immersion method, a misting method, a flow immersion method, a blowing method, a spraying method, a thermal spraying method, and a plasma spraying method may be mentioned. An electrostatic coating method using a powder coating gun is preferred from such a viewpoint that even when a molten film is thinned, the molten film has excellent surface smoothness, and furthermore, the coating film is excellent in concealing properties.

### Step (i):

The molten film in a molten state is cooled to room temperature (20 to 25°C) and as the case requires, cured to form the first coating film.

Cooling after the baking may be either quenching or annealing, but annealing is preferred in that the first coating film is less likely to be separated from the substrate.

The thickness of the first coating film is not particularly limited, but it is preferably from 20 to 1,000 µm. In applications for e.g. members for high-rise buildings such as aluminum curtain walls, it is preferably from 30 to 90 µm. In applications where a high level of weather resistance is required, such as an outdoor unit of an air conditioner that is installed on the seafront, a traffic signal pole, and a sign board, it is preferably from 100 to 200 µm. Further, as described above, formation of a thick coating film can be achieved by selecting a flow immersion method as the coating method.

### (Second coating material)

The second coating material is a coating material containing a fluororesin (L) and a titanium oxide pigment (M).

The second coating material may contain, as the case requires, a curing agent (N), a curing catalyst (O), a resin (P), a medium (Q) such as an organic solvent or water, and other component (R) other than these components.

The second coating material is preferably an aqueous coating material or solvent-based coating material, in that no special coating apparatus is necessary, it is easy to control the film thickness of the coating film, and excellent wettability on the first coating film surface is achieved.

### <Fluororesin (L)>

The fluororesin (L) may be a homopolymer or copolymer of a fluoroolefin. In the case of a copolymer, a copolymer of at least two fluoroolefins, a copolymer of at least one fluoroolefin and at least one fluorinated monomer other than a fluoroolefin, a copolymer of at least one fluoroolefin and at least one monomer having no fluorine atom, or a copolymer of at least one fluoroolefin, at least one fluorinated monomer other than a fluoroolefin and at least one monomer having no fluorine atom may, for example, be mentioned.

The fluoroolefin is a compound having at least one of hydrogen atoms in a hydrocarbon olefin (the formula Cₙ H₂ₙ) substituted by a fluorine atom.

The number of carbon atoms in the fluoroolefin is preferably from 2 to 8, more preferably from 2 to 6.

The number of fluorine atoms in the fluoroolefin is preferably at least 2, particularly preferably from 3 to 4. When the number of fluorine atoms is at least 2, the obtainable second coating film will be excellent in the weather resistance, and the after-described gloss retention is likely to be kept high. In the fluoroolefin, at least one hydrogen atom not substituted by a fluorine atom may be substituted by a chlorine atom. When the fluoroolefin has a chlorine atom, it will be easy to disperse the titanium oxide pigment (M) or other pigment (particularly a colored organic pigment such as cyanine blue and cyanine green) blended as the case requires in the fluororesin (L). Further, it will be possible to design the glass transition temperature of the fluororesin (L) to be at least 30°C and to suppress blocking of the second coating film.

As the fluoroolefin, preferred is at least one member selected from the group consisting of TFE, CTFE, hexafluoropropylene, VDF and vinyl fluoride, and particularly preferred is TFE or CTFE.

As the fluoroolefin, one type may be used alone, or two or more types may be used in combination.

As the fluoroolefin units, units formed directly by polymerization of a fluoroolefin are preferred.

The fluorinated monomer other than a fluoroolefin may, for example, be a fluoro(alkyl vinyl ether) or a perfluoro(alkyl vinyl ether).

The monomer having no fluorine atom may, for example, be a monomer having a hydroxy group, or a vinyl monomer, that is, a compound having a carbon-carbon double bond.

The fluororesin (L) may, for example, be a TFE/perfluoro(alkyl vinyl ether) copolymer (hereinafter sometimes referred to as PFA), a TFE/hexafluoropropylene copolymer, a TFE/perfluoro(alkyl vinyl ether)/hexafluoropropylene copolymer, an ethylene/TFE copolymer (hereinafter sometimes referred to as ETFE), a vinylidene fluoride polymer, polyvinyl fluoride, polychlorotrifluoroethylene, an ethylene/CTFE copolymer or a fluorinated polymer having a reactive group described hereinafter.

The fluororesin (L) may further have units of other monomer within a range not to impair essential properties as the case requires.

Such other monomer is a monomer other than a monomer forming essential units as units constituting the fluororesin (L) (for example, ethylene and TFE in ETFE, or TFE and perfluoro(alkyl vinyl ether) in PFA).

Such other monomer is particularly preferably VDF in that the resulting fluororesin (L) is excellent in the adhesion to a substrate (particularly an aluminum substrate) and fixation of an aluminum curtain wall by a sealing agent is easily conducted.

The glass transition temperature of the fluororesin (L) is preferably from -50°C to 300°C, more preferably from -50°C to 200°C, particularly preferably from -50°C to 180°C. When the glass transition temperature of the fluororesin (L) is within such a range, the obtainable second coating film will be excellent in the surface smoothness.

The fluororesin (L) is preferably a vinylidene fluoride polymer, whereby the obtainable second coating film will be excellent in the flexibility and the impact resistance. The vinylidene fluoride polymer includes a homopolymer of VDF and a copolymer of VDF and other monomer such as a fluoroolefin.

As the fluororesin (L), from the viewpoint of excellent stain resistance, water resistance, acid resistance an alkali resistance, a fluorinated polymer having a reactive group is preferred. The reactive group may, for example, be a hydroxy group, a carboxy group, and an amino group. As the fluororesin (L), particularly preferred is a fluorinated polymer (L1) containing a hydroxy group (hereinafter referred to as a "hydroxy group-containing fluorinated polymer (L1)") or a fluorinated polymer (L2) containing a carboxy group (hereinafter referred to as a "carboxy group-containing fluorinated polymer (L2)"). A hydroxy group-containing fluorinated polymer (L1) or a carboxy group-containing fluorinated polymer (L2) is, since it contains a hydroxy group or a carboxy group, excellent in a curing speed in a case where the second coating material contains an isocyanate-type curing agent (especially a blocked isocyanate-type curing agent) as the curing agent (N) as described later. Further, it is preferred in that the titanium dioxide pigment (M) is readily dispersed therein, whereby it is possible to obtain a second coating film with high gloss (60° glossiness of at least 60%).

### <Hydroxy group-containing fluorinated polymer (L1)>

As the hydroxy group-containing fluorinated polymer (L1), preferred is a hydroxy group-containing fluorinated polymer having fluoroolefin units, units of a monomer having a hydroxy group (hereinafter referred to as a "monomer (m1)") copolymerizable with the fluoroolefin, and, as the case requires, units of a monomer (hereinafter referred to as a "monomer (m2)") other than fluoroolefin and the monomer (m1).

The hydroxy group-containing fluorinated polymer (L1) may be a hydroxy group-containing fluorinated polymer obtained by introducing a hydroxy group by conversion of a reactive group of a polymer. As such a hydroxyl group-containing fluorinated polymer, preferred is a fluorinated polymer obtained by reacting a fluorinated polymer having fluoroolefin units, units of a monomer having a reactive functional group other than a hydroxy group, and, as the case requires, units of the above-mentioned monomer (m2), with a compound having a hydroxy group and a second reactive functional group reactive with the above reactive functional group.

The monomer (such as monomer (m1) and monomer (m2)) to be copolymerized with a fluoroolefin, may be a monomer having a fluorine atom other than a fluoroolefin, but a monomer having no fluorine atom is preferred.

The monomer (m1) is a monomer having a hydroxy group.

The monomer having a hydroxy group may, for example, be allyl alcohol, a hydroxyalkyl vinyl ether (2-hydroxyethyl vinyl ether, 4-hydroxybutyl vinyl ether, and cyclohexanediol monovinyl ether), a hydroxyalkyl allyl ether (2-hydroxyethyll allyl ether), a vinyl hydroxyalkanoate (vinyl hydroxypropionate), and a hydroxyalkyl (meth)acrylate (hydroxyethyl (meth)acrylate).

As the monomer (m1), one type may be used alone, or two or more types may be used in combination.

The monomer (m2) is preferably a vinyl monomer, i.e. a compound having a carbon-carbon double bond. The vinyl monomer is excellent in alternating copolymerizability with a fluoroolefin, and the polymerization yield can be made high. Further, even when it remains unreacted, it presents a less impact on the second coating film, and can be easily removed in the production process.

The vinyl monomer may, for example, be a vinyl ether, an allyl ether, a vinyl carboxylate, an allyl carboxylate, and an olefin.

The vinyl ether may, for example, be a cycloalkyl vinyl ether (cyclohexyl vinyl ether (hereinafter referred to also as "CHVE")), or an alkyl vinyl ether (nonyl vinyl ether, 2-ethylhexyl vinyl ether, hexyl vinyl ether, ethyl vinyl ether, n-butyl vinyl ether, and tert-butyl vinyl ether).

The allyl ether may, for example, be an alkyl allyl ether (ethyl allyl ether and hexyl allyl ether).

The vinyl carboxylate may, for example, be a vinyl ester of a carboxylic acid (acetic acid, butyric acid, pivalic acid, benzoic acid, and propionic acid). Further, as a vinyl ester of a carboxylic acid having a branched alkyl group, commercially available VeoVa-9 or VeoVa-10 (each manufactured by Shell Chemical Co., Ltd., trade name) may be used.

The allyl carboxylate may, for example, be an allyl ester of a carboxylic acid (acetic acid, butyric acid, pivalic acid, benzoic acid, and propionic acid).

The olefin may, for example, be ethylene, propylene, and isobutylene.

As the monomer (m2), from such a viewpoint that the glass transition temperature of the hydroxy group-containing fluorinated polymer (L1) can be designed to be at least 30°C, and it is possible to suppress blocking of the second coating film, a cycloalkyl vinyl ether is preferred, and CHVE is particularly preferred.

As the monomer (m2), from the viewpoint of excellent flexibility of the second coating film, one having a linear or branched alkyl group having at least three carbon atoms, is preferred.

As the monomer (m2), one type may be used alone, or two or more types may be used in combination.

As a combination of monomers to constitute the hydroxy group-containing fluorinated polymer (L1), from the viewpoint of excellent weather resistance, with a view to readily keeping high gloss retention described hereinafter, and from the viewpoint of excellent adhesion, flexibility, and blocking resistance, the following combination (1) is preferred, and the combination (2) or (3) is particularly preferred.

### Combination (1)

Fluoroolefin: TFE or CTFE,
Monomer (m1): a hydroxyalkyl vinyl ether,
Monomer (m2): at least one member selected from a cycloalkyl vinyl ether, an alkyl vinyl ether and a vinyl carboxylate.

### Combination (2)

Fluoroolefin: TFE,
Monomer (m1): a hydroxyalkyl vinyl ether,
Monomer (m2): CHVE or tert-butyl vinyl ether.

### Combination (3)

Fluoroolefin: CTFE,
Monomer (m1): a hydroxyalkyl vinyl ether,
Monomer (m2): CHVE or tert-butyl vinyl ether.

The proportion of the fluoroolefin units is preferably from 30 to 70 mol%, particularly preferably from 40 to 60 mol%, in all units (100 mol%) in the hydroxy group-containing fluorinated polymer (L1).

When the proportion of the fluoroolefin units are at least the above lower limit value, the second coating film will be excellent in weather resistance, and high gloss retention described hereinafter will readily be kept. When the proportion of the fluoroolefin units are at most the above upper limit value, the second coating film will be more excellent in the antifouling property, water resistance, acid resistance and alkali resistance.

The proportion of the monomer (m1) units is preferably from 0.5 to 20 mol%, particularly preferably from 1 to 15 mol%, in all units (100 mol%) in the hydroxy group-containing fluorinated polymer (L1). When the proportion of the monomer (m1) units is at least the above lower limit value, the antifouling property, water resistance, acid resistance and alkali resistance of the second coating film will be more excellent. When the proportion of the monomer (m1) units is at most the above upper limit value, the scratch resistance of the second coating film will be excellent.

The proportion of the monomer (m2) units is preferably from 20 to 60 mol%, particularly preferably from 30 to 50 mol%, in all units (100 mol%) in the hydroxy group-containing fluorinated polymer (L1). When the proportion of the monomer (m2) units is at least the above lower limit value, the glass transition temperature of the hydroxy group-containing fluorinated polymer (L1) will be proper, so that it will be easy to produce the second coating material. When the proportion of the monomer (m2) units is at most the above upper limit value, blocking of the second coating film will be suppressed, and the flexibility will be excellent.

The number average molecular weight of the hydroxy group-containing fluorinated polymer (L1) is preferably from 3,000 to 50,000, more preferably from 5,000 to 3Q,000. When the number average molecular weight of the hydroxy group-containing fluorinated polymer (B1) is at least the above lower limit value, the second coating film will be excellent in water resistance and salt water resistance. When the number average molecular weight of the hydroxy group-containing fluorinated polymer (L1) is at most the above upper limit value, the second coating film will be excellent in surface smoothness.

The hydroxy value of the hydroxy group-containing fluorinated polymer (L1) is preferably from 5 to 100 mgKOH/g, more preferably from 10 to 80 mgKOH/g. When the hydroxy value of the hydroxy group-containing fluorinated polymer (L1) is at least the above lower limit value, the second coating film will be more excellent in the antifouling property, water resistance, acid resistance and alkali resistance. When the hydroxy value of the hydroxy group-containing fluorinated polymer (L1) is at most the above upper limit value, the second coating film will be excellent in crack resistance under temperature cycles of a high temperature of at least 100°C and a low temperature of at most 10°C. The measurement of the hydroxy value is carried out in accordance with JIS K1557-1: 2007 (ISO 14900: 2001).

The glass transition temperature of the hydroxy group-containing fluorinated polymer (L1) is preferably from 30 to 150°C, more preferably from 35 to 120°C, particularly preferably from 35 to 100°C. When the glass transition temperature of the hydroxy group-containing fluorinated polymer (L1) is at least the above lower limit value, it will be easy to produce the second coating material. When the glass transition temperature of the hydroxy group-containing fluorinated polymer (L1) is at most the above upper limit value, the surface smoothness of the second coating film will be excellent.

### <Carboxy group-containing fluorinated polymer (L2)>

The carboxy group-containing fluorinated polymer (L2) is, for example, obtained by the following methods.
(1) A method wherein a hydroxy group of a hydroxy group-containing fluorinated polymer (L1) and an acid anhydride are reacted in an organic solvent, to form an ester bond and a carboxy group.
(2) A method wherein a hydroxy group-containing fluorinated polymer (L1) and an acid anhydride are melt-kneaded, so that a hydroxy group of the hydroxy group-containing fluorinated polymer (L1) and an acid anhydride are reacted to form an ester bond and a carboxy group.

The carboxy group in the carboxy group-containing fluorinated polymer (L2) obtained by these methods is derived from the acid anhydride. The carboxy group-containing fluorinated polymer (L2) may have a hydroxy group derived from the hydroxy group-containing fluorinated polymer (L1) of the raw material.

In a case where unreacted raw materials (a hydroxy group-containing fluorinated polymer (L1) and an acid anhydride) are contained in the second coating material, such unreacted raw materials will be treated as a carboxy group-containing fluorinated polymer (L2).

As the acid anhydride, a compound having a molecular weight of from 90 to 200 is preferred, in view of excellent reactivity with the hydroxy group-containing fluorinated polymer (L1). A compound having 4 to 15 carbon atoms is preferred, in view of excellent reactivity with the hydroxy group-containing fluorinated polymer (L1). Further, a compound having a melting point of from 20 to 180°C is preferred, in view of excellent reactivity with the hydroxy group-containing fluorinated polymer (L1).

As the acid anhydride, a dibasic acid anhydride may be mentioned.

The dibasic acid anhydride may, for example, be succinic anhydride, glutaric anhydride, itaconic anhydride, anhydrous 1,2-cyclohexanedicarboxylic acid (hexahydrophthalic anhydride), anhydrous cis-4-cyclohexene-1,2-dicarboxylic acid, phthalic anhydride, 4-methylhexahydrophthalic anhydride, 1,8-naphthalic anhydride, and maleic anhydride.

The glass transition temperature of the carboxy group-containing fluorinated polymer (L2) is preferably from 30 to 150°C, more preferably from 35 to120°C, particularly preferably from 35 to 100°C. When the glass transition temperature of the carboxy group-containing fluorinated polymer (L2) is at least the above lower limit value, it will be easy to produce the second coating material. When the glass transition temperature of the carboxy group-containing fluorinated polymer (L2) is at most the above upper limit value, the surface smoothness of the second coating film will be excellent.

### <Titanium oxide pigment (M)>

As the titanium oxide pigment (M), one surface-treated so that a photocatalytic reaction will hardly proceed, is preferred, and specifically, a titanium oxide pigment surface-treated with silica, alumina, zirconia, selenium, or an organic component (such as a polyol) is preferred, and a titanium oxide pigment adjusted to have a titanium oxide content of from 80 to 95 mass%, preferably from 83 to 90 mass% by such a surface treatment is particularly preferred. Further, it is preferred that the surface treatment is conducted with at least zirconia, and the amount of zirconia for treatment is within a range of from 0.01 to 5.0 mass% as zirconia atoms, from the viewpoint of protection of the coating film, since a photocatalytic reaction will be still less likely to proceed in a high temperature and high humidity region.

When the titanium oxide content is at least the above lower limit value, the obtainable second coating film will be excellent in whiteness. When the titanium oxide content is at most the above upper limit value, the second coating film is less likely to deteriorate.

### <Curing agent (N)>

The curing agent (N) is a compound which reacts with reactive groups of the resin to crosslink the resin or to increase the molecular weight thereby to cure the resin.

The curing agent (N) has at least two reactive groups capable of reacting with reactive groups of the fluororesin (L) or the after-described resin (P).

The reactive groups of the fluororesin (L) or the after-described resin (P) may, for example, be hydroxy groups, carboxy groups, amino groups, epoxy groups, alkoxysilyl groups or isocyanate groups.

The reactive groups of the curing agent (N) are selected depending on e.g. the reactive groups of the fluororesin (L) or the after-described resin (P). For example, in a case where the reactive groups of the resin are hydroxy groups, the reactive groups of the curing agent (N) are preferably isocyanate groups, blocked isocyanate groups, amino groups or epoxy groups.

As the curing agent (N), a known compound may be used. For example, an isocyanate-type curing agent, a blocked isocyanate-type curing agent, an amine-type curing agent, a β-hydroxyalkylamide-type curing agent or a triglycidyl isocyanurate-type curing agent may, for example, be mentioned.

In a case where the fluororesin (L) has hydroxy groups, the curing agent (N) preferably contains a compound having at least two reactive groups capable of reacting with the hydroxy group. In view of high hardness and with a view to forming a second coating film excellent in durability of e.g. the heat resistance and the water resistance, the weather resistance, the abrasion resistance and the impact resistance, it is particularly preferred that at least one member selected from the group consisting of an isocyanate-type curing agent, a blocked isocyanate-type curing agent, an amine-type curing agent and an epoxy-type curing agent is contained.

As the isocyanate-type curing agent, non-yellowing polyisocyanate or non-yellowing polyisocyanate modified product may be mentioned.

As the non-yellowing polyisocyanate, for example, an alicyclic polyisocyanate (such as isophorone diisocyanate or dicyclohexylmethane diisocyanate) or an aliphatic polyisocyanate (such as hexamethylene diisocyanate) may, for example, be mentioned.

As the non-yellowing polyisocyanate modified product, for example, an isocyanurate form (n1) of an aliphatic diisocyanate or alicyclic diisocyanate; a modified product (n2) having a structure represented by -Z-C(=O)-NH- obtained by modifying an aliphatic diisocyanate or alicyclic diisocyanate with a polyol or polyamine; a modified product (n3) having a structure represented by -Z-C(=O)-NH- obtained by modifying some of isocyanate groups of an isocyanurate form of an aliphatic diisocyanate or alicyclic diisocyanate, with a polyol or polyamine; or a modified product (n4) comprising a mixture of the isocyanurate form (n1) and the modified product (n2) may be mentioned. Here, Z in -Z-C(=O)-NH- is an organic group derived from the polyol or polyamine. The number of functional groups which the polyol or polyamine has is preferably from 2 to 3.

As the blocked isocyanate-type curing agent, one having the isocyanate group of the isocyanate-type curing agent blocked may be mentioned.

Blocking of the isocyanate group may be conducted with e.g. ε-caprolactam, methyl ethyl ketone oxime, methyl isobutyl ketone oxime, pyralidine or triazine.

As the amine-type curing agent, for example, a melamine resin, a guanamine resin, a sulfoamide resin, a urea resin or an aniline resin may, for example, be mentioned. Among them, in view of high curing rate, a melamine resin is preferred.

The melamine resin may, for example, be specifically an alkyl-etherified melamine resin having melamine alkyl-etherified. Among them, a melamine resin substituted by a methoxy group and/or a butoxy group is preferred.

As the epoxy-type curing agent, for example, triglycidyl isocyanurate (TGIC), "TM239" (manufactured by Nissan Chemical Industries, Ltd.) having a methylene group introduced to the glycidyl group moiety of TGIC, "PT-910" (manufactured by Ciba) which is a mixture of glycidyl trimellitate and glycidyl terephthalate, or a resin containing epoxy groups may be mentioned.

In a case where the fluororesin (L) has carboxy groups, the above-described amine-type curing agent or epoxy-type curing agent is suitably used.

### <Curing catalyst (O)>

The curing catalyst (O) is used to promote the curing reaction and to impart excellent chemical performance and physical performance to the obtainable second coating film. Particularly for curing in a short time at low temperature, the curing catalyst (O) is preferably incorporated.

As the curing catalyst (O), a known catalyst may be properly selected depending upon e.g. the type of the curing agent (N).

For example, in a case where the curing agent (N) is the isocyanate-type curing agent or the blocked isocyanate-type curing agent, as the curing catalyst (O), a tin catalyst or a zirconium catalyst is preferred.

As the tin catalyst, for example, tin octylate, tributyltin dilaurate or dibutyltin dilaurate may, for example, be mentioned.

As the zirconium catalyst, for example, zirconium chelate may, for example, be mentioned. As a commercial product of the zirconium catalyst, for example, "K-KAT XC-4205" manufactured by Kusumono Chemicals, Ltd. may be mentioned.

In a case where the curing agent (N) is the amine-type curing agent, as the curing catalyst (O), a blocked acid catalyst is preferred.

As the blocked acid catalyst, an amine salt of an acid such as carboxylic acid, sulfonic acid or phosphoric acid may be mentioned. Among them, preferred is a higher alkyl-substituted sulfonic acid amine salt such as a diethanolamine salt or triethylamine salt of p-toluene sulfonic acid, or a diethanol amine salt or triethylamine salt of dodecylbenzene sulfonic acid.

As the curing catalyst (O), one type may be used alone, or two or more types may be used in combination.

### <Resin (P)>

The resin (P) is a resin which does not correspond to the fluororesin (L).

The resin (P) may have reactive groups or may not have reactive groups. The reactive groups may, for example, be hydroxy groups, carboxy groups, amino groups, epoxy groups, alkoxysilyl groups or isocyanate groups.

The resin (P) may, for example, be a fluororesin other than the fluororesin (L) or a non-fluororesin (such as an acrylic resin, a polyester resin, an acrylic polyol resin, a polyester polyol resin, a urethane resin, an acrylic silicone resin, a silicone resin, an alkyd resin, an epoxy resin, an oxetane resin or an amino resin).

As the resin (P), one type may be used alone, or two or more types may be used in combination.

The resin (P) is one which is compatible with the fluororesin (L) to form a uniform second coating film, whereby the second coating film is likely to have gloss. In such a case, the resin (P) may be either a thermosetting resin or a thermoplastic resin.

In a case where a thermosetting resin is contained as the resin (P), it is preferred that the resin (P) can be bonded to the fluororesin (L) by the curing agent (N). Specifically, the resin (P) is preferably a polyester resin or acrylic resin having hydroxy groups, epoxy groups or carbonyl groups at its terminal or in its side chains.

In a case where a thermoplastic resin is contained as the resin (P), the resin (P) preferably has polar groups which interact with hydroxy groups of the fluororesin (L), for example, ester groups. Specifically, a polyester resin or acrylic resin having no curable group is preferred.

### <Medium (Q)>

As the medium (Q), water or an organic solvent may be mentioned.

As the organic solvent, preferred is one in which the fluororesin (L) and as the case requires, other component are dissolved or dispersed, and particularly preferred is one in which the fluororesin (L) is dissolved.

The organic solvent may, for example, be an alcohol, a ketone, an ester or a hydrocarbon.

The alcohol is preferred a C₁₋₁₀ alcohol, such as methanol, ethanol, 1-propanol, 2-propanol, 1-butanol or 2-butanol.

The ketone is preferably a C₃₋₁₀ alkyl ketone, such as acetone, methyl ethyl ketone, methyl amyl ketone, methyl isobutyl ketone, ethyl isobutyl ketone, diisobutyl ketone, cyclohexanone or isophorone.

The ester is preferably a C₂₋₁₀ ester, such as methyl acetate, ethyl acetate, propyl acetate, isobutyl acetate, butyl acetate, tert-butyl acetate, methyl propionate, ethyl propionate or ethyl ethoxypropionate.

The hydrocarbon may be an aromatic hydrocarbon such as xylene or toluene, or an aliphatic hydrocarbon mixture represented by mineral spirit.

As the organic solvent, one type may be used alone, or two or more types may be used in combination.

In a case where the second coating material is an aqueous coating material, the second coating material preferably contains as the medium (Q) an aqueous medium. The aqueous medium means a medium composed solely of water or of water and a small amount of an organic solvent.

The content of the organic solvent in the aqueous medium is preferably from 0 to 10 mass% based on the total mass of the aqueous medium. The upper limit of the content of the organic solvent is preferably 3 mass%, more preferably 1 mass%, further preferably 0.5 mass%, particularly preferably 0.3 mass%.

In a case where the aqueous medium contains an organic solvent, the organic solvent is preferably a water-soluble organic solvent which forms a uniform solution when mixed with water at an optional proportion at room temperature. For example, acetone, methyl ethyl ketone, ethanol or methanol may, for example, be mentioned.

In a case where the second coating material is a solvent-based coating material, the second coating material preferably contains as the medium (Q) an organic solvent. The organic solvent is preferably one in which the fluororesin (L) is dissolved.

The organic solvent is preferably a compound containing a carbonyl group, in view of excellent solubility of the fluororesin (L). As specific examples, a ketone or an ester may, for example, be mentioned.

### <Other component (R)>

Other component (R) is a component which does not correspond to any of the fluororesin (L), the titanium oxide pigment (M), the curing agent (N), the curing catalyst (O), the resin (P) and the medium (Q).

As other component (R), as a component incorporated in the coating material, various known components may be used. For example, a silane coupling agent, a light stabilizer, an ultraviolet absorber, a matting agent, a surfactant, a leveling agent or a pigment (excluding titanium oxide) may be mentioned.

### <Content of each component in second coating material>

The content of the fluororesin (L) in the second coating material is preferably from 10 to 75 mass%, more preferably from 20 to 70 mass%, particularly preferably from 25 to 60 mass% based on the solid content (100 mass%) in the second coating material. When the content of the fluororesin (L) is at least the lower limit value in the above range, the obtainable second coating film will be excellent in the weather resistance. When the content of the fluororesin (L) is at most the upper limit value in the above range, the cost of the second coating film can be suppressed. Further, a sufficient amount of the titanium oxide pigment (M) can be incorporated, and the function of the titanium oxide pigment (M) can efficiently be achieved.

The solid content in the second coating material means an amount obtained by subtracting the amount of the medium (Q) from the total amount of the second coating material. The same applies to the solid content in the solvent-based coating material and the solid content in the aqueous coating material described hereinafter.

The content of the titanium oxide pigment (M) in the second coating material is from 15 to 190 parts by mass, preferably from 16 to 185 parts by mass, more preferably from 18 to 180 parts by mass, further preferably from 20 to 150 parts by mass, particularly preferably from 30 to 120 parts by mass per 100 parts by mass of the fluororesin (L). When the content of the titanium oxide pigment (M) is at least the lower limit value in the above range, the first coating film and scars thereon will not be seen through the second coating film. When the content of the titanium oxide pigment (M) is at most the upper limit value in the above range, the second coating film will be excellent in the weather resistance. As a result, a decrease in the adhesion between the first coating film and the second coating film with time can be suppressed. Further, the after-described gloss retention will readily be kept high.

In a case where the second coating material contains the curing agent (N), the content of the curing agent (N) in the second coating material is preferably such an amount that the ratio (reactive groups/curable groups) of the number of moles of the reactive groups in the curing agent (N) to the number of moles of the reactive groups in the fluororesin (L) will be from 0.1 to 1.2. The molar ratio is more preferably from 0.2 to 1.1, particularly preferably from 0.3 to 1.1. When the content of the curing agent (N) is at least the lower limit value in the above range, the degree of curing of the coating material will be high, and adhesion between the second coating film and the substrate, and hardness and chemical resistance of the second coating film will be excellent. When the content of the curing agent (N) is at most the upper limit value in the above range, the second coating film will be less likely to become brittle and moreover, the second coating film will be excellent in weather resistance, heat resistance, chemical resistance, and moisture resistance.

In a case where the second coating material contains the curing catalyst (O), the content of the curing catalyst (O) in the second coating material is preferably from 0.00001 to 10 mass% in the solid content (100 mass%) in the second coating material. When the content of the curing catalyst (O) is at least the lower limit value in the above range, the catalytic effect tends to be sufficiently obtainable. When the content of the curing catalyst (O) is at most the upper limit value in the above range, a second coating film excellent in the heat resistance and the moisture resistance tends to be readily formed.

In a case where the second coating material contains the resin (P), the content of the resin (P) in the second coating material is preferably from 10 to 90 parts by mass, more preferably from 20 to 80 parts by mass, particularly preferably from 25 to 75 parts by mass per 100 parts by mass of the total amount of the fluororesin (L) and the resin (P) in the second coating material. When the content of the resin (P) is at least the above lower limit value, the cost of the second coating film can be suppressed. When the content of the resin (P) is at most the above upper limit value, the second coating film will be excellent in the weather resistance.

The content of the medium (Q) in the second coating material may be properly determined considering e.g. the solubility of the fluororesin (L).

The total content of other component (R) in the second coating material is preferably at most 45 mass%, particularly preferably at most 30 mass% in the solid content (100 mass%) of the second coating material.

### (Aqueous coating material)

In a case where the second coating material is an aqueous coating material, the aqueous coating material contains the fluororesin (L), the titanium oxide pigment (M) and the aqueous medium.

The aqueous coating material may contain, as the case requires, the curing agent (N), the curing catalyst (O), the resin (P), and other component (R).

The content of the aqueous medium in the aqueous coating material may be properly determined so as to achieve the desired solid content concentration, considering the dispersibility of the fluororesin (L), the viscosity of the aqueous coating material, and the coating method.

The solid content concentration of the aqueous coating material is preferably from 25 to 80 mass%, particularly preferably from 35 to 75 mass%.

The preferred ranges of the respective components other than the aqueous medium in the aqueous coating material are the same as the preferred ranges of the contents of the respective components in the second coating material.

In a case where the aqueous coating material contains the curing agent (N), the aqueous coating material may be a two-liquid type coating material composition such that the curing agent (N) is added to a composition containing the fluororesin (L) and containing no curing agent (N) immediately before formation of the second coating film, or may be a one-liquid type coating material composition containing both the fluororesin (L) and the curing agent (N).

The aqueous coating material may be obtained, for example, by mixing the fluororesin (L), the titanium oxide pigment (M) and the aqueous medium, and as the case requires, the curing agent (N), the curing catalyst (O), the resin (P), and other component (R). The order of mixing the respective components is not particularly limited.

As a method of mixing the respective components, a method usually employed for production of an aqueous coating material is employed. For example, a method of using e.g. a ball mill, a paint shaker, a sand mill, a jet mill, a rocking mill, an attritor, a three-roll mill or a kneader may be mentioned.

### (Solvent-based coating material)

In a case where the second coating material is a solvent-based coating material, the solvent-based coating material contains the fluororesin (L), the titanium oxide pigment (M) and an organic solvent.

The solvent-based coating material may contain, as the case requires, the curing agent (N), the curing catalyst (O), the resin (P), and other component (R).

The content of the organic solvent in the solvent-based coating material may be properly determined so as to achieve the desired solid content concentration, considering the solubility of the fluororesin (L), the viscosity of the solvent-based coating material, and the coating method.

The solid content concentration of the solvent-based coating material is preferably from 25 to 80 mass%, particularly preferably from 35 to 75 mass%.

The preferred ranges of the respective components other than the organic solvent in the solvent-based coating material are the same as the preferred ranges of the contents of the respective components in the second coating material.

In a case where the solvent-based coating material contains the curing agent (N), the solvent-based coating material may be a two-liquid type coating material composition such that the curing agent (N) is added to a composition containing the fluororesin (L) and containing no curing agent (N) immediately before formation of the second coating film, or may be a one-liquid type coating material composition containing both the fluororesin (L) and the curing agent (N).

The solvent-based coating material may be obtained, for example, by mixing the fluororesin (L), the titanium oxide pigment (M) and the organic solvent, and as the case requires, the curing agent (N), the curing catalyst (O), the resin (P), and other component (R). The order of mixing the respective components is not particularly limited.

As a method of mixing the respective components, a method usually employed for production of a solvent-based coating material may be employed. For example, a method of using e.g. a ball mill, a paint shaker, a sand mill, a jet mill, a rocking mill, an attritor, a three-roll mill or a kneader may be mentioned.

### (Second coating film)

The second coating film is a coating film formed by applying the second coating material (for example, the aqueous coating material or the solvent-based coating material) to a position to be repaired of the first coating film.

The gloss retention of the second coating film is preferably at least 60%, more preferably at least 65%, particularly preferably at least 70%. When the gloss retention of the second coating film is at least the above lower limit value, a difference between deterioration of the first coating film and deterioration of the second coating film with time tends to be small. As a result, a difference between the color of the first coating film and the color of the second coating film with time tends to be small, and the appearance of a coated article having the first coating film repaired by the second coating material is less likely to be deteriorated. Further, a decrease in the adhesion between the first coating film and the second coating film with time tends to be suppressed.

### <Gloss retention>

An exposure test is conducted by carrying out xenon arc radiation using a xenon weather meter in accordance with JIS K5600-7-7: 2008 (ISO 11341: 2004), method 1, under the following test conditions.

The ratio of the 60° specular glossiness of the second coating film after the xenon arc radiation for 3,000 hours, based on the 60° specular glossiness of the second coating film immediately before the xenon arc radiation being 100%, is taken as the gloss retention (unit: %). The 60° specular glossiness is measured in accordance with JIS K5600-4-7: 1999 (ISO 2813: 1994).

### <Test conditions>

Relative humidity: 70%RH,
temperature: 50°C,
light source: 80 W/m² (300 to 400 nm),
spraying of water and drying: a cycle of spraying for 18 minutes and drying for 102 minutes.

The second coating film may be formed, for example, by the following steps (j) and (k).
(j) A step of applying the second coating material to a position to be repaired of the first coating film, to form a wet film.
(k) A step of drying the wet film to form the second coating film.

### Step (j):

The position to be repaired of the first coating film is a position of the first coating film damaged at the time of processing, at the time of transfer, and at the time of attachment of a coated article having the first coating film formed on the surface of a substrate.

In a case where the second coating material is an aqueous coating material or a solvent-based coating material, as the coating method, various wet coating method may be employed, and for example, fluidized-bet coating, roll coating, air spray coating, airless spray coating or electrodeposition coating may be mentioned. Step (k):
The wet film is dried and as the case requires, cured to form the second coating film.

The method for drying the wet film may be air drying or may be forced drying by a heating means. The temperature for the forced drying is preferably from 40 to 250°C, more preferably from 100 to 220°C.

As a method for curing the wet film, a method of heating by a heating means such as an infrared drying furnace or a circulating hot air oven may be mentioned. The temperature for heating the wet film (curing temperature) is preferably from 40 to 250°C, more preferably from 100 to 220°C.

The thickness of the second coating film is not particularly limited, and is preferably from 10 to 200 µm, more preferably from 20 to 100 µm, particularly preferably from 30 to 80 µm. When the thickness of the second coating film is at least the above lower limit value, a second coating film excellent in the weather resistance having no pinhole will be obtained. When the thickness of the second coating film is at most the above upper limit value, the coating cost can be suppressed.

### (Function and mechanism)

In the above-described method for repairing a coating film of the present invention, since the first coating film is formed of a first coating material which is a powder coating material containing PVDF (A) and a resin (B) other than PVDF (A), the adhesion between the first coating film (PVDF coating film) and the second coating film (repair coating film) is high as compared with a conventional method of repairing a first coating film comprising only PVDF as the resin component. Further, since the resin (B) is flexible and has a moiety to improve the adhesion to the substrate or the second coating film, such as an ester bond, even when the second coating film is deformed by pushing or folding e.g. at the time of processing a coated article, the deformed portion is less likely to have cracking and is hardly whitened.

Further, since the first coating film is formed of a first coating material which is a powder coating material containing PVDF (A), and the second coating film is formed of a second coating material containing a fluororesin (L) and having a content of a titanium oxide pigment (M) being at most 190 parts by mass per 100 parts by mass of the fluororesin (L), both the first coating film and the second coating film are excellent in the weather resistance. Thus, a difference between deterioration of the first coating film and the deterioration of the second coating film with time tends to be small. As a result, a difference between the color of the first coating film and the color of the second coating film with time tends to be small, and the appearance of a coated article having the first coating film repaired by the second coating material is less likely to be deteriorated. Further, a decrease in the adhesion between the first coating film and the second coating film with time can be suppressed.

### [Coated article]

The coated article of the present invention comprises a substrate, a first coating film formed by applying a specific first coating material on the surface of the substrate, and a second coating film formed by applying a specific second coating material to a position to be repaired of the first coating film.

### (Substrate)

As the substrate, the same substrate as exemplified in the method for repairing a coating film may be mentioned, and preferred embodiments are also the same.

### (First coating material and first coating film)

As the first coating material and the first coating film, the same ones as exemplified for the method for repairing a coating film may be mentioned, and the preferred embodiments are also the same.

### (Second coating material and second coating film)

As the second coating material and the second coating film, the same ones as exemplified for the method for repairing a coating film may be mentioned, and the preferred embodiments are also the same.

In order to increase the adhesion between the substrate and the coating film formed of the first coating material, a primer layer containing a primer may be interposed between the substrate and the coating film.

As the primer, at least one resin selected from the group consisting of an acrylic resin, a polyester resin and an epoxy resin may be properly used.

The film thickness of the primer layer is preferably from 0.1 to 60 µm, more preferably from 3.0 to 40 µm.

### (Function and mechanism)

In the above-described coated article of the present invention, since the first coating film is formed of a first coating material which is a powder coating material containing PVDF (A) and a resin (B) other than PVDF (A), the adhesion between the first coating film (PVDF coating film) and the second coating film (repair coating film) is high as compared with a conventional coated article obtained by repairing a first coating film comprising only PVDF as the resin component. Further, since the resin (B) is flexible and has a moiety to improve the adhesion to the substrate and the second coating film, such as an ester bond, even when the second coating film is deformed by pushing or folding e.g. at the time of processing the coated article, the deformed portion is less likely to have cracking and is hardly whitened.

Further, since the first coating film is formed of a first coating material which is a powder coating material containing PVDF (A), and the second coating film is formed of a second coating material containing a fluororesin (L) and having a content of a titanium oxide pigment (M) being at most 190 parts by mass per 100 parts by mass of the fluororesin (L), both the first coating film and the second coating film are excellent in the weather resistance. Thus, a difference between deterioration of the first coating film and deterioration of the second coating film with time tends to be small. As a result, a difference between the color of the first coating film and the color of the second coating film with time tends to be small, and the appearance of a coated article having the first coating film repaired by the second coating material is less likely to be deteriorated. Further, a decrease in the adhesion between the first coating film and the second coating film with time can be suppressed.

### EXAMPLES

Now, the present invention will be described in further detail with reference to Examples and Comparative Examples. However, it should be understood that the present invention is by no means restricted thereto.

Ex. 1 and 2 are Examples of the present invention, and Ex. 3 to 5 are Comparative Examples.

### [Measurement method and evaluation method]

The measurement method and the evaluation method are shown below.

### (Melting point)

By means of Thermal Analysis System (manufactured by PerkinElmer Inc.), the heat balance with respect to 10 mg of a sample was measured within a temperature range of from -25 to 200°C at a temperature-increasing rate of 10°C/min, and the melting peak of the obtained chart was taken as the melting point.

### (Molecular weight)

With respect to a 0.5 mass% tetrahydrofuran (hereinafter referred to as THF) solution of a sample, the number average molecular weight and the mass average molecular weight as calculated as styrene were obtained by using a high performance GPS apparatus (manufactured by Tosoh Corporation, HLC-8220GPC) as a GPS apparatus and TSK gel G4000XL (manufactured by Tosoh Corporation) as a column, at a carrier (THF) flow rate of 1.0 mL/min.

### (Glass transition temperature)

By means of Thermal Analysis System (manufactured by PerkinElmer Inc.), the heat balance with respect to 10 mg of a sample was measured within a temperature range of from -25 to 200°C at a temperature-increasing rate of 10°C/min, and the glass transition temperature was determined by a midpoint method from the inflection point of the obtained chart.

### (Average particle size)

The average particle size of a powder was determined by measuring the 50% average volume particle size distribution by a laser diffraction particle size analyzer (manufactured by Sympatec Inc., Helos-Rodos).

### (Appearance of second coating film)

The surface state of the second coating film of a test piece was visually observed and evaluated by the following standards.
○ (good): The second coating film was excellent in surface smoothness, and cissing and poor wettability were not confirmed.
× (bad): The second coating film was poor in surface smoothness and cissing and poor wettability were confirmed.

### (Adhesion (1) between first coating film and second coating film)

In accordance with JIS K5600-5-6: 1999 (ISO 2409: 1992), a test on adhesion (cross-cut test) was conducted, and the adhesion was evaluated by the following standards.
○ (good): Peeling of the second coating film from the first coating film was not confirmed.
× (bad): Peeling of the second coating film from the first coating film was confirmed.

### (Adhesion (2) between first coating film and second coating film)

A test piece was installed outdoors in Naha-city, Okinawa prefecture, and with respect to the test piece after one year, a test on adhesion (cross-cut test) was conducted in accordance with JIS K5600-5-6: 1999 (ISO 2409: 1992), and the adhesion was evaluated by the following standards.
○ (good): Peeling of the second coating film from the first coating film was not confirmed.
× (bad): Peeling of the second coating film from the first coating film was confirmed.

### (Processability (1) of second coating film)

In accordance with JIS K5600-5-2: 1999 (ISO 1520: 1973), a cupping test was conducted, and the processability was evaluated by the following standards.
○ (good): No change of the color was observed on the second coating film on the processed portion (pushed portion).
× (bad): A change of the color such as whitening was observed on the second coating film on the processed portion (pushed portion).

### (Processability (2) of second coating film)

In accordance with JIS K5600-5-1: 1999 (ISO 1519: 1973), a bend test (cylindrical mandrel) was conducted, and the processability was evaluated by the following standards.
○ (good): No change of the color was observed on the second coating film on the processed portion (bent portion).
× (bad): A change of the color such as whitening was observed on the second coating film on the processed portion (bent portion).

### (60° specular glossiness)

The 60° specular glossiness of each of the surface of the first coating film and the surface of the second coating film was measured by using a gloss meter (manufactured by Nippon Denshoku Industries Co., Ltd., PG-1M) in accordance with JIS K5600-4-7: 1999 (ISO 2813: 1994).

### (Gloss retention)

An exposure test was conducted by carrying out xenon arc radiation using a xenon weather meter in accordance with JIS K5600-7-7: 2008 (ISO 11341: 2004), method 1, under the following test conditions.

The ratio of the 60° specular glossiness of the second coating film after the xenon arc radiation for 3,000 hours based on the 60° specular glossiness of the second coating film immediately before the xenon arc radiation being 100% was taken as the gloss retention (unit:%).

### <Test conditions>

Relative humidity: 70%RH,
temperature: 50°C,
light source: 80 W/m² (300 to 400 nm),
spraying of water and drying: a cycle of spraying for 18 minutes and drying for 102 minutes.

### (Accelerated weather resistance)

With respect to the test piece after the exposure test conducted to determine the gloss retention, the color difference and the 60° specular glossiness of each of the first coating film and the second coating film were measured, and the accelerated weather resistance was evaluated by the following standards.
○ (good): No significant difference in the color difference and the 60° specular glossiness between the first coating film and the second coating film was observed.
× (bad): A significant difference in the color difference and the 60° specular glossiness between the first coating film and the second coating film was observed, and apparently, the difference between the first coating film and the second coating film was distinct.

### (Weather resistance)

A test piece was installed outdoors in Naha-city, Okinawa prefecture, and with respect to the test piece after 2 years, the color difference and the 60° specular glossiness of each of the first coating film and the second coating film were measured, and the weather resistance was evaluated by the following standards.
○ (good): No significant difference in the color difference and the 60° specular glossiness between the first coating film and the second coating film was observed.
× (bad): A significant difference in the color difference and the 60° specular glossiness between the first coating film and the second coating film was observed, and apparently, the difference between the first coating film and the second coating film was distinct.

### [Production Example 1]

### (Production of acrylic resin (1))

In a 1L four-necked flask equipped with a condenser and a thermometer, 200 mL of deionized water, 2 g of a reactive emulsifier (manufactured by Sanyo Chemical Industries, Ltd. ELEMINOL JS-2, succinic acid ester derivative) and 2 g of polyoxyethylene nonylphenyl ether (ethylene oxide 10 mol added) were added. When the temperature reached 80°C in a warm bath under a nitrogen stream, 10 mL of a 2 mass% aqueous solution of ammonium persulfate was added. Then, a mixture of 140.2 g of MMA, 80.0 g of EMA and 0.2 g of n-lauryl mercaptan as a chain transfer agent, was dropwise added over a period of 1 hour. Immediately thereafter, 2 mL of a 2 mass% aqueous solution of ammonium persulfate was added to initiate the reaction. After 3 hours, the temperature in the flask was raised to 85°C and held for one hour, followed by filtration through a 300-mesh metal gauze to obtain a bluish white aqueous dispersion. The obtained aqueous dispersion was freeze-coagulated at -25°C, and after dehydration washing, vacuum dried at 80°C to obtain 209.2 g of a MMA copolymer (MMA units/EMA units: 2/1 (molar ratio)) in the form of a white powder as an acrylic resin (1). The acrylic resin (1) had a glass transition temperature of 55°C, a number average molecular weight of 53,000, a mass average molecular weight of 92,000 and molecular weight distribution of 1.75.

### [Production Example 2]

### (Production of first coating material (1))

70 g of PVDF (manufactured by SHENZHOU NEWMATERIAL, PVDF DS203, melting point: 170°C, number average molecular weight: 160,000, mass average molecular weight: 270,000, molecular weight distribution : 1.7), 30 g of the acrylic resin (1) obtained in Production Example 1, 0.1 g of an ultraviolet absorber (manufactured by BASF, Tinuvin 405), 40.0 g of a pigment (manufactured by Du-Pont, Ti-Pure R960), 0.4 g of a degassing agent (benzoin) and 0.1 g of a surface modifier (manufactured by BYK-Chemie Inc., BYK-360P) were mixed for about 10 to 30 minutes by using a high speed mixer (manufactured by Yusaki Co., Ltd.), to obtain a powdered mixture. Using a twin screw extruder (manufactured by Thermo Prism Ltd., 16 mm extruder), the mixture was subjected to melt-kneading at a barrel set temperature of 190°C, to obtain pellets made of a composition for powder coating material. The pellets were pulverized at room temperature using a pulverizer (rotor speed mill P14, manufactured by FRITSCH), followed by classification by 200 mesh, to obtain a powder having an average particle size of about 20 µm as a first coating material (1).

### [Production Example 3]

### (Production of comparative first coating material (2))

A powder was obtained as a first coating material (2) in the same manner as in Production Example 2 except that the acrylic resin (1) was not used and 10 g of PVDF was used.

### [Production Example 4]

### (Production of second coating material (1))

210 parts by mass of a titanium oxide pigment (manufactured by Du-Pont, Ti-Pure R960), 21 pars by mass of a pigment dispersing agent (manufactured by BYK-Chemie Inc., Disperbyk 190, a copolymer compatible with the pigment, acid value: 10 mgKOH/g), 4.5 parts by mass of a defoaming agent (manufactured by Cognis, DEHYDRAN 1620), 64.5 parts by mass of deionized water and 300 parts by mass of glass beads were mixed, followed by dispersion by using a dispersing machine, and the glass beads were removed by filtration to prepare a pigment composition.

To 55 g of the pigment composition, 193 g of an aqueous dispersion of a hydroxy group-containing fluorinated polymer (manufactured by Asahi Glass Company, Limited, LUMIFLON (registered trademark) FE4400, solid content: 50 mass%, hydroxy value: 55 mgKOH/g, glass transition temperature: 35°C), 15 g of dipropylene glycol mono-n-butyl ether as a film-forming assistant, 0.5 g of a thickener (manufactured by AkzoNobel, BERMOCOLL 2150), 0.1 g of a silica-type matting agent (manufactured by Evonik, Acematt OK 520), and 22.9 g of a water-dispersed isocyanate curing agent (manufactured by Sumika Bayer, BAYHYDUR 3100) were added and mixed to prepare a second coating material (1). The content of the titanium oxide pigment was 40 parts by mass per 100 parts by mass of the hydroxy group-containing fluorinated polymer.

### [Production Example 5]

### (Production of second coating material (2))

210 parts by mass of a titanium oxide pigment (manufactured by Du-Pont, Ti-Pure R960), 21 pars by mass of a pigment dispersing agent (manufactured by BYK-Chemie Inc., Disperbyk 190, a copolymer compatible with the pigment, acid value: 10 mgKOH/g), 4.5 parts by mass of a defoaming agent (manufactured by Cognis, DEHYDRAN 1620), 64.5 parts by mass of deionized water and 300 parts by mass of glass beads were mixed, followed by dispersion by using a dispersing machine, and the glass beads were removed by filtration to prepare a pigment composition.

To 55 g of the pigment composition, 193 g of an aqueous dispersion containing a fluororesin and an acrylic resin (manufactured by Arkema, Kynar Aquatec FMA-12, solid content: 50 mass%, PVDF/acrylic resin: 50/50 (mass ratio)), 15 g of 2,2,4-trimethyl-1,3-pentadiol mono(2-methylpropanoate) as a film-forming assistant and 0.5 g of a thickener (manufactured by AkzoNobel, BERMOCOLL 2150) were added and mixed to prepare a second coating material (2). The content of the titanium oxide pigment was 80 parts by mass per 100 parts by mass of PVDF.

### [Production Example 6]

### (Production of comparative second coating material (3))

To 100 g of an epoxy resin-type coating material (manufactured by AGC COAT-TECH Co., Ltd., BONNEPOCOAT #15MP (white)), 0.1 g of a silica-type matting agent (manufactured by Evonik, Acematt OK 520) was added to prepare a second coating material (3).

### [Production Example 7]

### (Production of comparative second coating material (4))

210 parts by mass of a titanium oxide pigment (manufactured by Du-Pont, Ti-Pure R960), 21 pars by mass of a pigment dispersing agent (manufactured by BYK-Chemie Inc., Disperbyk 190, a copolymer compatible with the pigment, acid value: 10 mgKOH/g), 4.5 parts by mass of a defoaming agent (manufactured by Cognis, DEHYDRAN 1620), 64.5 parts by mass of deionized water and 300 parts by mass of glass beads were mixed, followed by dispersion by using a dispersing machine, and the glass beads were removed by filtration to prepare a pigment composition.

To 55 g of the pigment composition, 38.6 g of an aqueous dispersion of a hydroxy group-containing fluorinated polymer (manufactured by Asahi Glass Company, Limited, LUMIFLON (registered trademark) FE4400, solid content: 50 mass%), 154.4 g of a silicone acrylic resin emulsion (manufactured by NIPPON SHOKUBAI CO., LTD., UDOUBLE EF-010, solid content: 50 mass%), 15 g of dipropylene glycol mono-n-butyl ether as a film-forming assistant, 0.5 g of thickener (manufactured by AkzoNobel, BERMOCOLL 2150), 0.1 g of a silica type matting agent (manufactured by Evonik, Acematt OK 520) and 22.9 g of a water-dispersed isocyanate curing agent (manufactured by Sumika Bayer, BAYHYDUR 3100) were added and mixed to prepare a second coating material (4). The content of the titanium oxide pigment was 200 parts by mass per 100 parts by mass of the hydroxy group-containing fluorinated polymer.

### [Ex. 1 to 5]

The first coating material as identified in Table 1 was applied by electrostatic coating on one surface of a chromate treated aluminum plate by electrostatic coating machine (manufactured by Onoda Cement Co., Ltd., tradename: GX3600C) and held in an atmosphere of 250°C for 10 minutes. The aluminum plate was left to cool to room temperature, to obtain an aluminum plate with a first coating film having a thickness of from 25 to 45 µm. The initial 60° specular glossiness of the first coating film was measured.

Then, the second coating material as identified in Table 1 was applied to half of the surface of the first coating film of the first coating film-coated aluminum plate by a film applicator so that the dry film thickness would be 30 µm, and dried at a temperature of 23°C under a humidity of 50%RH for 2 weeks to prepare a test piece having half of the surface of the first coating film covered with a second coating film. The test piece was evaluate and the results are shown in Table 1.

**TABLE 1**

| Ex. | | | 1 | 2 | 3 | 4 | 5 |
|---|---|---|---|---|---|---|---|
| First coating material | | | (1) | (1) | (1) | (2) | (1) |
| Second coating material | | | (1) | (2) | (3) | (1) | (4) |
| Content of titanium oxide pigment per 100 parts by mass of fluororesin in second coating material (parts by mass) | | | 40 | 80 | - | 40 | 200 |
| Evaluation | Appearance of second coating film | | ○ | ○ | ○ | ○ | ○ |
| | Adhesion (1) between first coating film and second coating film | | ○ | ○ | ○ | × | ○ |
| | Adhesion (2) between first coating film and second coating film | | ○ | ○ | × | × | ○ |
| | Processability (1) of second coating film | | ○ | ○ | ○ | × | ○ |
| | Processability (2) of second coating film | | ○ | ○ | ○ | × | ○ |
| | 60° specular glossiness (%) | Initial first coating film | 37 | 37 | 37 | 31 | 37 |
| | | Initial second coating film | 37 | 35 | 40 | 37 | 35 |
| | | Second coating film after exposure test | 33 | 25 | 12 | 33 | 14 |
| | | Gloss retention (%) | 90 | 72 | 30 | 90 | 41 |
| | Appearance of initial first coating film and second coating film | | No difference | No difference | No difference | No difference | No difference |
| | Accelerated weather resistance | | ○ | ○ | × | ○ | × |
| | Weather resistance | | ○ | ○ | × | ○ | × |

The second coating film in each of Ex. 1 and 2 in which the first coating film formed of a specific first coating material was repaired by a specific second coating material, was excellent in the appearance, the adhesion to the first coating film, the processability and the gloss retention.

In Ex. 3 in which a second coating material containing no fluororesin was used, the adhesion between the first coating film and the second coating film was insufficient, and the second coating film had a so low gloss retention of less than 60%, such being insufficient.

In Ex. 4 in which a first coating material containing no acrylic resin was used, the adhesion between the first coating film and the second coating film, and the processability of the second coating film, were insufficient.

In Ex. 5 in which the content of the titanium oxide pigment in the second coating material was higher than 190 parts by mass per 100 parts by mass of the fluororesin, the second coating film was insufficient in the gloss retention, and was insufficient in the accelerated weather resistance and the weather resistance.

The method for repairing a coating film of the present invention is useful for repairing a coating film of a coated article such as a traffic light, a lamppost, a road sign pole, a bridge, a bridge railing, a building material (a gate, a fens, a house siding material, a curtain wall, and a roof), an automobile body or member (a bumper and a wiper blade), a home electrical appliance (an outdoor unit of an air conditioner and an exterior of a water heater), a window power blade, a back sheet of a solar cell, a rear side of a burning mirror for solar power generation, and an exterior of a sodium-sulfur battery.

## Claims

1. A method for repairing a coating film, which comprises applying a second coating material to a position to be repaired of a first coating film formed by applying a first coating material to the surface of a substrate, to form a second coating film thereby to repair the first coating film,
wherein the first coating material is a powder coating material containing a polyvinylidene fluoride homopolymer or copolymer (PVDF (A)) and a resin (B) other than PVDF (A),
wherein the second coating material is a coating material containing a fluororesin (L) and a titanium oxide pigment (M), and
wherein the content of the titanium oxide pigment (M) is from 15 to 190 parts by mass per 100 parts by mass of the fluororesin (L).

2. The method for repairing a coating film according to Claim 1, wherein the resin (B) is at least one member selected from the group consisting of an acrylic resin, a polyester resin and an epoxy resin.

3. The method for repairing a coating film according to Claim 1 or 2, wherein the fluororesin (L) is at least one member selected from the group consisting of a vinylidene fluoride polymer, a hydroxy group-containing fluorinated polymer and a carboxy group-containing fluorinated polymer.

4. The method for repairing a coating film according to any one of Claims 1 to 3, wherein the second coating material is an aqueous coating material or a solvent-based coating material.

5. A coated article, which comprises a substrate, a first coating film formed by applying a first coating material to the surface of the substrate, and a second coating film formed by applying a second coating material to a position to be repaired of the first coating film,
wherein the first coating material is a powder coating material containing a polyvinylidene fluoride homopolymer or copolymer (PVDF (A)) and a resin (B) other than PVDF (A),
wherein the second coating material is a coating material containing a fluororesin (L) and a titanium oxide pigment (M), and
wherein the content of the titanium oxide pigment (M) is from 15 to 190 parts by mass per 100 parts by mass of the fluororesin (L).

6. The coated article according to Claim 5, wherein the resin (B) is at least one member selected from the group consisting of an acrylic resin, a polyester resin and an epoxy resin.

7. The coated article according to Claim 5 or 6, wherein the fluororesin (L) is at least one member selected from the group consisting of a vinylidene fluoride polymer, a hydroxy group-containing fluorinated polymer and a carboxy group-containing fluorinated polymer.

8. The coated article according to any one of Claims 5 to 7, wherein the second coating material is an aqueous coating material or a solvent-based coating material.

9. The coated article according to any one of Claims 5 to 8 or the method for repairing a coating film according to any one of Claims 1 to 4, wherein PVDF (A) has a melting point of from 152 to 160°C, a number average molecular weight of from 50,000 to 400,000, and a mass average molecular weight of from 100,000 to 500,000,
wherein the number average molecular weight and the mass average molecular weight are values as calculated as polystyrene measured by a gel permeation chromatography (GPC) method as described in the experimental section.

10. The coated article according to any one of Claims 5 to 9 or the method for repairing a coating film according to any one of Claims 1 to 4 and 9, wherein the content of PVDF (A) is from 30 to 90 parts by mass per 100 parts by mass of the total amount of PVDF (A) and the resin (B).

11. The coated article according to any one of Claims 5 to 10 or the method for repairing a coating film according to any one of Claims 1 to 4, 9, and 10, wherein the fluororesin (L) has a glass transition temperature of at most 300°C,
wherein the glass transition temperature is a midpoint glass transition temperature measured by a differential scanning calorimetry (DSC) method as described in the experimental section.

12. The coated article according to any one of Claims 5 to 11 or the method for repairing a coating film according to any one of Claims 1 to 4 and 9 to 11, wherein the titanium oxide pigment (M) is surface-treated and has a titanium oxide content of from 80 to 95 wt%.

13. The coated article according to any one of Claims 5 to 12 or the method for repairing a coating film according to any one of Claims 1 to 4 and 9 to 12, wherein the thickness of the first coating film is from 20 to 1,000 µm, and the thickness of the second coating film is from 10 to 200 µm.

## Patentansprüche

1. Verfahren zum Reparieren eines Beschichtungsfilms, umfassend das Aufbringen eines zweiten Beschichtungsmaterials auf eine zu reparierende Stelle eines ersten Beschichtungsfilms, gebildet durch Aufbringen eines ersten Beschichtungsmaterials auf die Oberfläche eines Substrats, um einen zweiten Beschichtungsfilm zu bilden, um dadurch den ersten Beschichtungsfilm zu reparieren,
wobei das erste Beschichtungsmaterial ein Pulverbeschichtungsmaterial ist, das ein Polyvinylidenfluorid-Homopolymer oder -Copolymer (PVDF (A)) und ein anderes Harz (B) als PVDF (A) enthält,
wobei das zweite Beschichtungsmaterial ein Beschichtungsmaterial ist, das ein Fluorharz (L) und ein Titanoxidpigment (M) enthält, und
wobei der Gehalt des Titanoxidpigments (M) von 15 bis 190 Massenteile pro 100 Massenteile des Fluorharzes (L) beträgt.

2. Verfahren zum Reparieren eines Beschichtungsfilms nach Anspruch 1, wobei das Harz (B) mindestens ein Mitglied, ausgewählt aus der Gruppe, bestehend aus einem Acrylharz, einem Polyesterharz und einem Epoxidharz, ist.

3. Verfahren zum Reparieren eines Beschichtungsfilms nach Anspruch 1 oder 2, wobei das Fluorharz (L) mindestens ein Mitglied, ausgewählt aus der Gruppe, bestehend aus einem Vinylidenfluoridpolymer, einem hydroxygruppenhaltigen fluorierten Polymer und einem carboxygruppenhaltigen fluorierten Polymer, ist.

4. Verfahren zum Reparieren eines Beschichtungsfilms nach einem der Ansprüche 1 bis 3, wobei das zweite Beschichtungsmaterial ein wässriges Beschichtungsmaterial oder ein Beschichtungsmaterial auf Lösungsmittelbasis ist.

5. Beschichteter Gegenstand, umfassend ein Substrat, einen ersten Beschichtungsfilm, gebildet durch Aufbringen eines ersten Beschichtungsmaterials auf die Oberfläche des Substrats, und einen zweiten Beschichtungsfilm, gebildet durch Aufbringen eines zweiten Beschichtungsmaterials auf eine zu reparierende Stelle des ersten Beschichtungsfilms,
wobei das erste Beschichtungsmaterial ein Pulverbeschichtungsmaterial ist, das ein Polyvinylidenfluorid-Homopolymer oder -Copolymer (PVDF (A)) und ein anderes Harz (B) als PVDF (A) enthält,
wobei das zweite Beschichtungsmaterial ein Beschichtungsmaterial ist, das ein Fluorharz (L) und ein Titanoxidpigment (M) enthält, und
wobei der Gehalt des Titanoxidpigments (M) von 15 bis 190 Massenteile pro 100 Massenteile des Fluorharzes (L) beträgt.

6. Beschichteter Gegenstand nach Anspruch 5, wobei das Harz (B) mindestens ein Mitglied, ausgewählt aus der Gruppe, bestehend aus einem Acrylharz, einem Polyesterharz und einem Epoxidharz, ist.

7. Beschichteter Gegenstand nach Anspruch 5 oder 6, wobei das Fluorharz (L) mindestens ein Mitglied, ausgewählt aus der Gruppe, bestehend aus einem Vinylidenfluoridpolymer, einem hydroxygruppenhaltigen fluorierten Polymer und einem carboxygruppenhaltigen fluorierten Polymer, ist.

8. Beschichteter Gegenstand nach einem der Ansprüche 5 bis 7, wobei das zweite Beschichtungsmaterial ein wässriges Beschichtungsmaterial oder ein Beschichtungsmaterial auf Lösungsmittelbasis ist.

9. Beschichteter Gegenstand nach einem der Ansprüche 5 bis 8 oder das Verfahren zum Reparieren eines Beschichtungsfilms nach einem der Ansprüche 1 bis 4, wobei PVDF (A) einen Schmelzpunkt von 152 bis 160°C, ein Zahlenmittel des Molekulargewichts von 50.000 bis 400.000 und ein Gewichtsmittel des Molekulargewichts von 100.000 bis 500.000 aufweist,
wobei das Zahlenmittel des Molekulargewichts und das Gewichtsmittel des Molekulargewichts Werte sind, wie berechnet als Polystyrol, gemessen durch ein Gelpermeationschromatographie-(GPC)-Verfahren, wie im experimentellen Abschnitt beschrieben.

10. Beschichteter Gegenstand nach einem der Ansprüche 5 bis 9 oder Verfahren zum Reparieren eines Beschichtungsfilms nach einem der Ansprüche 1 bis 4 und 9, wobei der Gehalt an PVDF (A) von 30 bis 90 Massenteile pro 100 Massenteile der Gesamtmenge an PVDF (A) und dem Harz (B) beträgt.

11. Beschichteter Gegenstand nach einem der Ansprüche 5 bis 10 oder Verfahren zum Reparieren eines Beschichtungsfilms nach einem der Ansprüche 1 bis 4, 9 und 10, wobei das Fluorharz (L) eine Glasübergangstemperatur von höchstens 300°C aufweist,
wobei die Glasübergangstemperatur eine Mittelpunkts-Glasübergangstemperatur ist, gemessen durch ein Differential-Scanning-Kalorimetrie-(DSC)-Verfahren, wie im experimentellen Abschnitt beschrieben.

12. Beschichteter Gegenstand nach einem der Ansprüche 5 bis 11 oder Verfahren zum Reparieren eines Beschichtungsfilms nach einem der Ansprüche 1 bis 4 und 9 bis 11, wobei das Titanoxidpigment (M) oberflächenbehandelt ist und einen Titanoxidgehalt von 80 bis 95 Gew.-% aufweist.

13. Beschichteter Gegenstand nach einem der Ansprüche 5 bis 12 oder Verfahren zum Reparieren eines Beschichtungsfilms nach einem der Ansprüche 1 bis 4 und 9 bis 12, wobei die Dicke des ersten Beschichtungsfilms von 20 bis 1.000 µm und die Dicke des zweiten Beschichtungsfilms von 10 bis 200 µm beträgt.

## Revendications

1. Procédé de réparation d'un film de revêtement, qui comprend l'application d'un deuxième matériau de revêtement en une position à réparer d'un premier film de revêtement formé par application d'un premier matériau de revêtement sur la surface d'un substrat, afin de former un deuxième film de revêtement pour ainsi réparer le premier film de revêtement,
dans lequel le premier matériau de revêtement est un matériau de revêtement en poudre contenant un homopolymère ou copolymère de poly(fluorure de vinylidène) (PVDF (A)) et une résine (B) autre que le PVDF (A),
dans lequel le deuxième matériau de revêtement est un matériau de revêtement contenant une fluororésine (L) et un pigment d'oxyde de titane (M), et
dans lequel la teneur en pigment d'oxyde de titane (M) se situe dans l'intervalle allant de 15 à 190 parties en masse par 100 parties en masse de la fluororésine (L).

2. Procédé de réparation d'un film de revêtement selon la revendication 1, dans lequel la résine (B) est au moins un membre sélectionné parmi le groupe consistant en une résine acrylique, une résine polyester et une résine époxy.

3. Procédé de réparation d'un film de revêtement selon la revendication 1 ou 2, dans lequel la fluororésine (L) est au moins un élément choisi parmi le groupe consistant en un polymère de fluorure de vinylidène, un polymère fluoré contenant des groupes hydroxy et un polymère fluoré contenant des groupes carboxy.

4. Procédé de réparation d'un film de revêtement selon l'une quelconque des revendications 1 à 3, dans lequel le deuxième matériau de revêtement est un matériau de revêtement aqueux ou un matériau de revêtement à base de solvant.

5. Article revêtu, qui comprend un substrat, un premier film de revêtement formé par application d'un premier matériau de revêtement sur la surface du substrat, et un deuxième film de revêtement formé par application d'un deuxième matériau de revêtement en une position à réparer sur le premier film de revêtement,
dans lequel le premier matériau de revêtement est un matériau de revêtement en poudre contenant un homopolymère ou copolymère de poly(fluorure de vinylidène) (PVDF (A)) et une résine (B) autre que le PVDF (A),
dans lequel le deuxième matériau de revêtement est un matériau de revêtement contenant une fluororésine (L) et un pigment d'oxyde de titane (M), et
dans lequel la teneur en pigment d'oxyde de titane (M) se situe dans l'intervalle allant de 15 à 190 parties en masse par 100 parties en masse de la fluororésine (L).

6. Article revêtu selon la revendication 5, dans lequel la résine (B) est au moins un membre sélectionné parmi le groupe consistant en une résine acrylique, une résine polyester et une résine époxy.

7. Article revêtu selon la revendication 5 ou 6, dans lequel la fluororésine (L) est au moins un élément choisi parmi le groupe consistant en un polymère de fluorure de vinylidène, un polymère fluoré contenant des groupes hydroxy et un polymère fluoré contenant des groupes carboxy.

8. Article revêtu selon l'une quelconque des revendications 5 à 7, dans lequel le deuxième matériau de revêtement est un matériau de revêtement aqueux ou un matériau de revêtement à base de solvant.

9. Article revêtu selon l'une quelconque des revendications 5 à 8 ou procédé de réparation d'un film de revêtement selon l'une quelconque des revendications 1 à 4, dans lequel le PVDF (A) a un point de fusion allant de 152 à 160°C, un poids moléculaire moyen en nombre allant de 50 000 à 400 000 et un poids moléculaire moyen en poids allant de 100 000 à 500 000,
dans lequel le poids moléculaire moyen en nombre et le poids moléculaire moyen en poids sont des valeurs calculées comme polystyrène, mesurées par un procédé de chromatographie de perméation sur gel (GPC), décrit dans la partie expérimentale.

10. Article revêtu selon l'une quelconque des revendications 5 à 9 ou procédé de réparation d'un film de revêtement selon l'une quelconque des revendications 1 à 4 et 9, dans lequel la teneur en PVDF (A) se situe dans l'intervalle allant de 30 à 90 parties en masse par 100 parties en masse de la quantité totale de PVDF (A) et de la résine (B).

11. Article revêtu selon l'une quelconque des revendications 5 à 10 ou procédé de réparation d'un film de revêtement selon l'une quelconque des revendications 1 à 4, 9 et 10, dans lequel la fluororésine (L) présente une température de transition vitreuse d'au plus 300°C,
dans lequel la température de transition vitreuse est une température de transition vitreuse médiane mesurée par un procédé de calorimétrie différentielle à balayage (DSC) comme décrit dans la partie expérimentale.

12. Article revêtu selon l'une quelconque des revendications 5 à 11 ou procédé de réparation d'un film de revêtement selon l'une quelconque des revendications 1 à 4 et 9 à 11, dans lequel le pigment d'oxyde de titane (M) est traité en surface et présente une teneur en.oxyde de titane allant de 80 à 95% en poids.

13. Article revêtu selon l'une quelconque des revendications 5 à 12 ou procédé de réparation d'un film de revêtement selon l'une quelconque des revendications 1 à 4 et 9 à 12, dans lequel l'épaisseur du premier film de revêtement se situe dans l'intervalle allant de 20 à 1000 µm, et l'épaisseur du deuxième film de revêtement se situe dans l'intervalle allant de 10 à 200 µm.
